# EUROPÄISCHE PATENTSCHRIFT

(11) **EP 1 438 197 B1**
(45) Veröffentlichungstag und Bekanntmachung des Hinweises auf die Patenterteilung: **15.10.2008**
(21) Anmeldenummer: 02797626.5
(22) Anmeldetag: 27.08.2002
(51) Int. Cl.: B41M 5/00, C08K 5/42

(54) **VERFAHREN ZUR ERHÖHUNG DER WEISSE VON PAPIER MIT HILFE VON KATIONISCHEN POLYELEKTROLYTEN**
METHOD FOR INCREASING THE WHITENESS OF PAPER BY MEANS OF CATIONIC POLYELECTROLYTES
PROCEDE POUR AUGMENTER LA BLANCHEUR DU PAPIER A L'AIDE DE POLYELECTROLYTES CATIONIQUES

(30) Priorität: 03.09.2001 DE 10142887; 12.12.2001 DE 10161157
(43) Veröffentlichungstag der Anmeldung: 21.07.2004
(73) Patentinhaber: BASF SE, 67056 Ludwigshafen (DE)
(72) Erfinder: BLUM, Thierry, 67434 Neustadt (DE); LINHART, Friedrich, 69123 Heidelberg (DE); KAUB, Hans-Peter, 67122 Altrip (DE); CHAMP, Simon, 67063 Ludwigshafen (DE); WENDKER, Martin, 67549 Worms (DE); MECK, Dieter, 67251 Freinsheim (DE); GEIGER, Steffen, 67136 Fussgönheim (DE)
(86) Internationale Anmeldenummer: PCT/EP2002/009542
(87) Internationale Veröffentlichungsnummer: WO 2003/021041

(56) Entgegenhaltungen:
- EP-A- 1 055 774
- WO-A-02/38861
- WO-A-99/13841
- WO-A-99/13842
- WO-A-99/67317
- DE-A- 2 807 711

## Beschreibung

Die Erfindung betrifft ein neuartiges Verfahren zur Erhöhung der Weiße und Helligkeit von Papier. Weiterhin betrifft die Erfindung ein neuartiges Verfahren zur Verbesserung der Bedruckbarkeit von Papieren, besonders nach dem Ink-Jet-Verfahren. Ferner betrifft die Erfindung Papiere, welche mit diesem Verfahren hergestellt sind und das Bedrucken von Papieren, welche mit diesem Verfahren hergestellt sind. Außerdem betrifft die Erfindung Mischungen von optischen Aufhellern in einem Lösungsmittel mit kationischen Polyelektrolyten.

Ein großer Teil der weißen Papiere, die in Büros und Haushalten zum Einsatz kommen, werden auf verschiedene Art beschrieben und bedruckt. Sie werden klassisch handschriftlich mit wäßriger Tinte oder mit Kugelschreiber beschrieben, sie werden im Kopierer bedruckt oder sie werden, an Stelle der früher verwendeten Schreibmaschine, mit einem an einen Personalcomputer (PC) angeschlossenen Druckerbedruckt. Bei diesem kann es sich beispielsweise um konventionelle Nadel-, um Laser- oder um Ink-Jet-Drucker handeln. In Anbetracht der Anforderungen der verschiedenen Beschreib- und Bedruckmethoden an solche Papiere bezeichnet man diese häufig auch als "Multi Purpose Papiere".

Das Bedrucken von Papieren, Pappen, Kartons, papierähnlichen Materialien oder Textilien, im folgenden kurz "Aufzeichnungsmaterialien" genannt, mit sogenannten "Digitalen Druckverfahren", von denen eines das Ink-Jet-Verfahren ist, gewinnt in der Druckindustrie immer mehr an Bedeutung. Die Verwendung von Ink-Jet-Druckern an Computern im häuslichen Bereich nimmt besonders stark zu.

Bei den klassischen Druckverfahren wird meist eine mit Farbe beaufschlagte Druckform auf das Papier gedrückt. Die Druckfarben sind dabei in den meisten Fällen nicht in Wasser gelöst, während beim Ink-Jet-Verfahren in Wasser gelöste Farbe auf das Aufzeichnungsmaterial gespritzt wird. Deshalb sind die Ansprüche von Seiten des Druckers an das Aufzeichnungsmaterial, z.B. Papier, von ganz anderer Art als bei den klassischen Druckverfahren.

Die größten Anforderungen an die Qualität des Papiers stellt das Ink-Jet-Verfahren. Bei diesem werden wäßrige Tinten, die wasserlösliche Farbstoffe enthalten, aus feinen Düsen auf das Papier gespritzt. Das Papier soll das Wasser möglichst schnell aufnehmen, damit das Bild nicht verwischt werden kann. Gleichzeitig aber muß der Farbstoff an der Auftreffstelle des Tintenstrahls konturensauber fixiert und an einem zu tiefen Eindringen in das Papier gehindert werden. Andernfalls ist ein Teil der Tinte auch auf der Rückseite des Papiers zu sehen, was man "Durchschlagen" nennt. Der Farbstoff darf auch nicht in der Papierebene aus der Auftreffstelle herauswandern, sei es durch Kapillarkräfte zwischen den Papierfasern oder durch das Faserinnere selbst ("Wicking") , und er darf auch nicht in benachbarte Farbstoffareale einwandern ("Bleeding"). Sehr wichtig ist dabei eine hohe Weiße des Papiers, damit insbesondere bei hellen Farben und Pastelltönen, bei denen der Untergrund besonders stark durchscheint, eine gute Farbwiedergabe gewährleistet ist.

Um der Papieroberfläche die gewünschten Eigenschaften zu verleihen, ist deren Veredelung notwendig. Üblicherweise werden dazu Basispapiere mit speziellen pigmenthaltigen Streichmassen beschichtet und ergeben dann sogenannte Ink-Jet-Papiere. Qualitativ hochwertige Ink-Jet-Papiere sind im allgemeinen mit Streichmassen beschichtet, die als Pigment feinteilige Kieselsäure und als Binde- und Hilfsmittel beispielsweise Polyvinylalkohol, Polyvinylpyrrolidon und ein kationisches Polymer, z. B. Polydiallyldimethylammoniumchlorid enthalten (s. z.B. G. Morea-Swift, H. Jones, THE USE OF SYNTHETIC SILICAS IN COATED MEDIA FOR INK-JET PRINTING, in 2000 TAPPI Coating Conference and Trade Fair Proceedings, 317 - 328).

Die so hergestellten Papiere sind jedoch relativ teuer, schwierig neben anderen Papiersorten herstellbar und durch ihre spezielle Beschichtung für andere Beschreib- und Bedruckverfahren oft wenig geeignet und erfüllen nicht die Ansprüche an die oben genannten "Multi Purpose Papiere".

Streichmassen bestehen im wesentlichen aus einem zumeist weißen Pigment, einem polymeren Bindemittel und Additiven, welche die rheologischen und andere Eigenschaften der Streichfarbe und die Eigenschaften der Oberfläche des gestrichenen Aufzeichnungsmaterials im gewünschten Sinn beeinflussen. Solche Additive werden häufig auch als "Cobinder" bezeichnet. Durch das Bindemittel werden die Pigmente auf dem Aufzeichnungsmaterial fixiert und der Zusammenhalt in der erhaltenen Beschichtung gewährleistet.

Durch die Beschichtung mit Papierstreichmassen erhalten Rohpapiere eine glatte, einheitlich weiße Oberfläche. Die Streichmassen bewirken zudem eine Verbesserung der Bedruckbarkeit des Aufzeichnungsmaterials.

Die Beschichtung von Papier mit Papierstreichmassen ist gut bekannt, siehe z.B. "The Essential Guide to Aqueous Coating of Paper and Board", T.W.R. Dean (ed.), published by the Paper Industry Technical Association (PITA), 1997.

Eines der wichtigsten Ziele, die durch das Beschichten von Papier mit pigmenthaltigen Streichfarben angestrebt werden, ist die Erhöhung der Weiße des Papiers.

Eines der wichtigsten Ziele bei der Herstellung von Papieren und Kartons, die beschrieben oder bedruckt werden sollen, im folgenden auch als graphische Papiere bezeichnet, ist eine hohe Weiße der Oberfläche des Papiers oder des Kartons. Eine hohe Weiße vermittelt nicht nur den Eindruck von Sauberkeit und Unbedenklichkeit, sondern erhöht durch den stärkeren Kontrast zur Schriftfarbe auch die Lesbarkeit der Schrift, insbesondere bei schlechter Beleuchtung. Ein besonderer Vorteil einer hohen Weiße zeigt sich, wenn das Papier oder der Karton farbig bedruckt, beschrieben oder bemalt werden soll. Jeweißer der Untergrund ist, destobesser und natürlicher ist der Farbkontrast, besonders beim Beschreiben, Bedrucken oder Bemalen mit hellen oder durchscheinenden Farben oder Pastelltönen. Durch die in jüngerer Zeit zunehmende Verwendung von Altpapier bei der Herstellung von graphischen Papieren ist ein solches Produkt des Papierherstellers deutlich grauer als bei der Verwendung frischer Faserstoffe.

Aus diesen Gründen unternehmen die Papierhersteller große Anstrengungen, die Weiße ihres Produktes, besonders wenn es sich um Papier für graphische Zwecke handelt, zu erhöhen. Bereits bei der Herstellung der Rohstoffe, sei es Zellstoff, Holzstoff oder Pigment, wird ein hoher Aufwand getrieben, um diese Rohstoffe möglichst weiß zu erhalten. Bei der eigentlichen Papierherstellung werden alle Hilfsstoffe und Bedingungen vermieden, die die Weiße des Papiers beeinträchtigen könnten.

Eine bekannte Methode, die Weiße und Helligkeit von Papier zu erhöhen, ist die Verwendung von sogenannten "Weißtönern" oder "optischen Aufhellern", die man, entsprechend dem heutigen Stand der Technik, bei verschiedenen Arbeitsschritten der Papierherstellung und der Papierveredelung der Papiermasse zusetzt oder auf das Papier aufbringt.

Dabei handelt es sich um farbstoffähnliche fluoreszierende Verbindungen, die das für das menschliche Auge nicht sichtbare, kurzwellige, ultraviolette Licht absorbieren und als längerwelliges blaues Licht wieder abgeben, wodurch dem menschlichen Auge eine höhere Weiße vermittelt und so der Weißgrad erhöht wird.

Bei den in der Papierindustrie verwendeten optischen Aufhellern handelt es sich meistens um 1,3,5-Triazinyl-Derivate der 4,4'-Diaminostilben-2,2'-disulfonsäure, die zusätzliche Sulfonsäuregruppen tragen können, also z.B. insgesamt 2, 4 oder 6. Eine Übersicht über solche Aufheller findet sich beispielsweise in: Ullmann's Encyclopedia of Industrial Chemistry, Sixth Edition, 2000 Electronic Release, OPTICAL BRIGHTENERS - Chemistry of Technical Products. Es kommen aber auch neuere Aufhellertypen in Frage, z.B. Derivate des 4,4'-Distyrylbiphenyls, wie sie ebenfalls in der vorher genannten Literatur Ullmann's Encyclopedia of Industrial Chemistry beschrieben sind.

Die Weißtöner können in verschiedenen Phasen der Papierherstellung und Papierveredelung eingesetzt werden. Man kann die optischen Aufheller z.B. der Papiermasse zusetzen, aber auch in einer Leimpresse zusammen mit Oberflächenleimungsmitteln oder Verfestigern, wie z.B. Stärke, oder auch zusammen mit weiteren Hilfsmitteln. Am häufigsten werden optische Aufheller in Papierstreichmassen, mit denen Papier und Karton beschichtet werden, verwendet, bei mehreren Schichten insbesondere in der obersten Schicht, die sich dem Betrachter zeigt. Dabei ist es wichtig, daß der Aufheller in dieser Schicht verbleibt und nicht in tiefere Schichten des Papiers migriert. Er soll dabei in der Fläche gleichmäßig verteilt sein und gleichzeitig so fest in dieser obersten Schicht gebunden, daß er durch Lösungsmittel, z.B. Wasser, nicht herausgelöst wird.

Der Einsatz der optischen Aufheller in der Streichmasse führt aber nur dann zum optimalen Erfolg, wenn diese in der fertigen Beschichtung des Papiers nicht nur in einer optimalen Verteilung, sondern auch in optimaler chemischer Struktur und Konformation vorliegen, da z. B. bei Stilbenen nur die trans-Form optisch aktiv ist und diese nur dann maximal fluoresziert, wenn sie monomolekular verteilt ist und in einer Ebene festgehaltenwird (K. P. Kreutzer, Grundprozesse der Papiererzeugung 2: Grenzflächenvorgänge beim Einsatz chemischer Hilfsmittel, H.-G. Völkel und R. Grenz (Hrsg.), PTS München, 2000, PTS-Manuskript: PTS-GPE - SE 2031-2).

Beim Zusatz zur Papiermasse kommt dies im allgemeinen durch die Adsorption an die Cellulose zustande. Bei der Anwendung in der Oberfläche, sei es mittels eines Leimpressenauftrages oder mittels einer Beschichtung mit einer Streichmasse, werden der Papierstreichmasse polymere Verbindungen zugesetzt, die den Effekt des optischen Aufhellers im Auftrag verstärken und als "Aktivator", "Träger", "Booster", "Cobinder" oder "Carrier" bezeichnet werden. Eine wichtige Funktion der in Streichmassen neben den Bindemitteln verwendeten Cobinder ist deren aufhelleraktivierende Wirkung. Als geeignete Cobinder kann man wasserlösliche Polymere, z.B. Polyvinylalkohol, Carboxymethylcellulose, anionische oder nichtionische abgebaute Stärken, Kasein, Soja-Protein, wasserlösliche Styrol-Acrylat-Copolymerisate, Harnstoff-Formaldehyd-Harze, Melamin-Formaldehyd-Harze, Polyglykole und acrylesterhaltige Copolymerisate verwenden (siehe z.B. K. P. Kreutzer, a.a.O.).

Von diesen Carriern bewirkt normalerweise Polyvinylalkohol die günstigste Wirkung mit Aufhellern, s. z.B. W. Bieber, A. Brockes, B. Hunke, J. Krüsemann, D. Loewe, F. Müller, P. Mummenhoff, in Blankophor®- Optische Aufheller für die Papierindustrie, Bayer AG, Geschäftsbereich Farben, Leverkusen, SP 600, 8.89, Seite 63 - 64.

Der Auftrag einer wäßrigen Aufheller-Lösung auf das Papier ohne einen Carrier ist bekannt, wird jedoch nur in Spezialfällen durchgeführt (W. Bieber et al., a.a.O., Seite 56, 62).

In der Internationalen Patentanmeldung WO 01/21891 ist der Auftrag einer wäßrigen Aufheller-Lösung auf ein gestrichenes Papier beschrieben. In dieser Anmeldung ist auch angegeben, daß man den Aufheller zusammen mit einem Carrier, wie Stärke, Carboxymethylcellulose oder Polyvinylalkohol, auf das gestrichene Papier auftragen kann, wenn in der Streichschicht eine Carrier-Eigenschaft fehlt. Über das Mengenverhältnis von optischem Aufheller zu Polyvinylalkohol ist nichts ausgesagt. Es wird lediglich eine "wässerige Lösung von 10 Gew.% optischem Aufheller (Handelsware) und 3 % aufgelöster Stärke" erwähnt (S. 7, 3. Absatz).

EP-A 192 600 beschreibt wäßrige Präparate aus mindestens einem optischen Aufheller, Polyethylenglykol (zur Stabilisierung) und Wasser, die als optisches Aufhellungsmittel für Papierstreichmassen verwendet werden können und dazu mit den anderen Streichmassenkomponenten versetzt werden.

EP 1055774 und WO99/67317 beschreiben die Verwendung von Mischungen aus optischem Aufheller und kationischem Polymer in der Papierherstellung.

In der Internationalen Anmeldung WO 02/38861 sind Papierstreichmassen offenbart, als Additiv enthaltend Polymerisate oder Co-polymerisate, in denen N-Vinylformamid einpolymerisiert enthalten ist, sowie deren Verwendung.

Dieser Erfindung lag die Aufgabe zugrunde, durch einen einfachen Verfahrensschritt die Weiße von Aufzeichnungsmaterialien zu erhöhen.

Die Aufgabe wurde gelöst durch ein Verfahren zur Herstellung von Aufzeichnungsmaterialien, wobei man Mischungen A, enthaltend
i) 0,2 bis 2 Gew.-% mindestens einen optischen Aufheller,
ii) 5 bis 15 Gew.-% mindestens einen kationischen Polyelektrolyten, wobei es sich um ein Polymer oder Copolymer handelt, welches mindestens ein N-Vinylcarbonsäureamid einpolymerisiert enthält, und
iii)83 bis 94,8 Gew.-% von mindestens einem Lösungsmittel
bezogen auf 100 Gew.-% der Mischung auf das Aufzeichnungsmaterial aufbringt. Sind noch andere papiertypische Hilfsmittel (s.u.) enthalten, so verringert sich der Gehalt an Lösungsmittel iii) entsprechend.

Unter kationischen Polyelektrolyten sind dabei Polymere zu verstehen, die an der Polymerkette verteilt positive Ladungen tragen, sowie solche, die als trockene Substanzen nichtionisch sein können, aber auf Grund ihres basischen Charakters in Wasser oder anderen Lösungsmitteln protoniert werden und damit positive Ladungen tragen.

Es wurde überraschend gefunden, daß man die Weiße von Aufzeichnungsmaterialien, besonders von Papier und Karton, sehr einfach und effektiv erhöhen kann, wenn man geeignete Mischungen von optischen Aufhellern und bestimmten kationischen Polyelektrolyten in einem Lösungsmittel z.B. auf die Oberfläche der Aufzeichnungsmaterialien aufbringt. Besonders überraschend bei diesem Verfahren ist, daß dies entgegen dem allgemeinen Stand des Wissens, wonach kationische Polyelektrolyte zu einer Löschung der Fluoreszenz der üblichen preiswerten anionischen optischen Aufheller führen (siehe z.B. K. P. Kreutzer, a.a.O., S. 8-22; siehe W. Bieber et al. , a.a.O., Seiten 58, 65, 71) und wonach sich diese optischen Aufheller und kationische Elektrolyte gegenseitig ausfällen (siehe W. Bieber et al., a.a.O., Seite 59), gelingt. Diese Ansichten sind in der Papierindustrie allgegenwärtig.

Zusätzlich lassen sich die Aufzeichnungsmaterialien nach dem Ink-Jet-Verfahren bedrucken und liefern dabei eine wesentlich bessere Farbwiedergabe und eine wesentlich bessere Konturenschärfe als herkömmliche Papiere.

Ferner wurde gefunden, daß sich handelsübliche Lösungen von optischen Aufhellern mit wäßrigen Lösungen von kationischen Polyelektrolyten mischen lassen und daß diese Mischungen lagerstabil sind, obwohl der Fachmann annehmen mußte, daß sich aus den Molekülen des Aufhellers und den Polymermolekülen Komplexe oder Assoziate bilden, die nach der Erfahrung des Fachmanns normalerweise wasserunlöslich sein müßten (siehe W. Bieber et al., a.a.O., Seite 59).

Die Problematik, stabile Lösungen von optischen Aufhellern zu bereiten, ist beispielsweise aus der EP-A 192 600, S. 1 bekannt.

Die bei dem erfindungsgemäßen Verfahren verwendbaren Polymere und Copolymere ii), in dieser Schrift (Co) Polymere genannt, enthalten mindestens ein N-Vinylcarbonsäureamid, z.B. der Formel (IIa), einpolymerisiert.

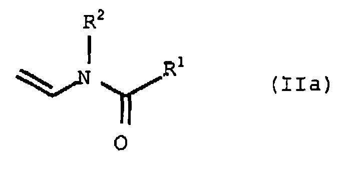

In Formel (IIa) bedeuten R¹ und R² unabhängig voneinander Wasserstoff oder C₁ bis C₂₀-Alkyl, wobei der Alkylrest geradkettig oder verzweigt sein kann.

Bevorzugt sind R¹ und R² unabhängig voneinander Wasserstoff oder C₁ bis C₁₀-Alkyl, besonders bevorzugt Wasserstoff oder C₁ bis C₄-Alkyl, ganz besonders bevorzugt Wasserstoff oder Methyl und insbesondere Wasserstoff.

R¹ und R² können auch gemeinsam eine 2 bis 8 Kohlenstoffatome enthaltende, geradkettige oder verzweigte Kettebilden, bevorzugt eine 3 bis 6 und besonders bevorzugt eine 3 bis 5 Kohlenstoffatome enthaltende. Gegebenenfalls können ein oder mehrere Kohlenstoffatome durch Heteroatome, wie z.B. Sauerstoff, Stickstoff oder Schwefel, ersetzt sein.

Beispiele für die Reste R¹ und R² sind Methyl, Ethyl, *iso*-Propyl, n-Propyl, n-Butyl, *iso*-Butyl, *sek*-Butyl, *tert*-Butyl, n-Hexyl, n-Heptyl, 2-Ethylhexyl, n-Octyl, n-Decyl, n-Undecyl, n-Dodecyl, n-Tetradecyl, n-Hexadecyl, n-Octadecyl oder n-Eicosyl.

Beispiele für Reste R¹ und R², die gemeinsameine Kettebilden, sind 1,2-Ethylen, 1,2-Propylen, 1,3-Propylen, 2-Methyl-1,3-propylen, 2-Ethyl-1,3-propylen, 1,4-Butylen, 1,5-Pentylen, 2-Methyl-1,5-pentylen, 1,6-Hexylen oder 3-Oxa-1,5-pentylen.

Beispiele für solche N-Vinylcarbonsäureamide gemäß Formel (IIa) sind N-Vinylformamid, N-Vinylacetamid, N-Vinylpropionsäureamid, N-Vinylbuttersäureamid, N-Vinylisobuttersäureamid, N-Vinyl-2-Ethylhexansäureamid, N-Vinyldekansäureamid, N-Vinyldodekansäureamid, N-Vinylstearinsäureamid, N-Methyl-N-vinylformamid, N-Methyl-N-vinylacetamid, N-Methyl-N-Vinylpropionsäureamid, N-Methyl-N-Vinylbuttersäureamid, N-Methyl-N-Vinylisobuttersäureamid, N-Methyl-N-Vinyl-2-Ethylhexansäureamid, N-Methyl-N-Vinyldekansäureamid, N-Methyl-N-Vinyldodekansäureamid, N-Methyl-N-Vinylstearinsäureamid, N-Ethyl-N-Vinylformamid, N-Ethyl-N-Vinylacetamid, N-Ethyl-N-Vinylpropionsäureamid, N-Ethyl-N-Vinylbuttersäureamid, N-Ethyl-N-Vinylisobuttersäureamid, N-Ethyl-N-Vinyl-2-Ethylhexansäureamid, N-Ethyl-N-Vinyldekansäureamid, N-Ethyl-N-Vinyldodekansäureamid, N-Ethyl-N-Vinylstearinsäureamid, N-*iso*-Propyl-N-Vinylformamid, N-*iso-*Propyl-N-Vinylacetamid, N-*iso*-Propyl-N-Vinylpropionsäureamid, N-*iso*-Propyl-N-Vinylbuttersäureamid, N-*iso*-Propyl-N-Vinylisobuttersäureamid, N-*iso*-Propyl-N-Vinyl-2-Ethylhexansäureamid, N-*iso*-Propyl-N-Vinyldekansäureamid, N-*iso-*Propyl-N-Vinyldodekansäureamid, N-*iso*-Propyl-N-Vinylstearinsäureamid, N-n-Butyl-N-Vinylformamid, N-n-Butyl-N-Vinylacetamid, N-n-Butyl-N-Vinylpropionsäureamid, N-n-Butyl-N-Vinylbuttersäureamid, N-n-Butyl-N-Vinylisobuttersäureamid, N-n-Butyl-N-Vinyl-2-Ethylhexansäureamid, N-n-Butyl-N-Vinyldekansäureamid, N-n-Butyl-N-Vinyldodekansäureamid, N-n-Butyl-N-Vinylstearinsäureamid, N-Vinylpyrrolidon oder N-Vinylcaprolactam.

Bevorzugt sind N-Vinylformamid, N-Vinylacetamid, N-Methyl-N-vinylformamid, N-Methyl-N-vinylacetamid, N-Vinylpyrrolidon oder N-Vinylcaprolactam, besonders bevorzugt ist N-Vinylformamid.

Die Herstellung der für das erfindungsgemäße Verfahren geeigneten (Co)polymeren ist an sich bekannt.

Zum Beispiel ist die Herstellung der Polymerisate und Copolymerisate von N-Vinylformamid (R¹ = R² = H in (IIa) ), die für das erfindungsgemäße Verfahren verwendet werden können, in EP-B1 71 050 beschrieben.

Auch die Synthese von N-Alkyl-N-vinylcarbonsäureamiden und deren Polymerisaten und Copolymerisaten ist bekannt oder erfolgt nach bekannten Methoden, siehe z.B. Kirk - Othmer, Encyclopedia of Chemical Technology, 4. Edition, Volume 24, J. Wiley & Sons, NY, 1995, N-vinylamide polymers, page 1070; Üchino, N., Machida, S., Japan. Kokai JP 51100188 (C.A. 86:73393) oder DE-A 42 41 117.

Die Herstellung von Polymeren und Copolymeren von N-Vinylpyrrolidon ist beispielsweise bekannt aus Handbook of Water-Soluble Gums and Resins, Robert L. Davidson ed., McGraw-Hill, New York, 1980.

Die erfindungsgemäß verwendbaren (Co)polymerisate sind beispielsweise erhältlich durch (Co) polymerisieren von
a) 5 bis 100 Mol-% eines oder mehrerer N-Vinylcarbonsäureamide, z.B. der Formel (IIa),
b) 0 bis 95 Mol-% monoethylenisch ungesättigter Carbonsäuren mit 3 bis 8 C-Atomen und/oder deren (Erd-)Alkalimetall- und Ammoniumsalze und gegebenenfalls
c) bis zu 30 Mol-% anderer monoethylenisch ungesättigter Verbindungen, die mit den Monomeren a) und b) copolymerisierbar sind und gegebenenfalls
d) bis zu 2 Mol-% an Verbindungen, die mindestens zwei ethylenisch ungesättigte nicht-konjugierte Doppelbindungen im Molekül aufweisen,
wobei die Summe immer 100 mol% beträgt, und gegebenenfalls anschließend teilweiser oder vollständiger Abspaltung der Carbonsäuregruppen aus den in das (Co)polymerisat einpolymerisierten N-Vinylcarbonsäureamideinheiten unter Bildung von Amin- bzw. Ammoniumgruppen.

Als Monomere der Gruppe a) kommen beispielsweise die oben angeführten N-Vinylcarbonsäureamide der Formel (IIa) in Betracht.

Zur Herstellung der (Co)polymeren können die genannten Monomere entweder allein oder in Mischung untereinander eingesetzt werden. Die (Co)polymerisate enthalten die Monomere der Gruppe a) in Mengen von 5 bis 100, vorzugsweise 30 bis 100 Mol-% in einpolymerisierter Form.

Als Monomere der Gruppe b) kommen monoethylenisch ungesättigte Carbonsäuren mit 3 bis 8 C-Atomen sowie die wasserlöslichen Salze dieser Monomere in Betracht. Zu dieser Gruppe von Monomeren gehören beispielsweise Acrylsäure, Methacrylsäure, Dimethylacrylsäure, Ethacrylsäure, Maleinsäure, Citraconsäure, Methylenmalonsäure, Allylessigsäure, Vinylessigsäure, Crotonsäure, Fumarsäure, Mesaconsäure und Itaconsäure. Aus dieser Gruppe von Monomeren verwendet man vorzugsweise Acrylsäure, Methacrylsäure, Maleinsäure oder auch Mischungen der genannten Carbonsäuren, insbesondere Mischungen aus Acrylsäure und Maleinsäure oder Mischungen aus Acrylsäure und Methacrylsäure. Die Monomere der Gruppe b) können entweder in Form der freien Carbonsäuren oder in partiell oder vollständig neutralisierter Form bei der Copolymerisation eingesetzt werden. Zur Neutralisation der monoethylenisch ungesättigten Carbonsäuren verwendet man beispielsweise Alkalimetall-, Erdalkalimetallbasen, Ammoniak oder Amine, z.B. Natronlauge, Kalilauge, Soda, Pottasche, Natriumhydrogencarbonat, Magnesiumoxid, Calciumhydroxid, Calciumoxid, Ammoniak, Triethylamin, Ethanolamin, Diethanolamin, Triethanolamin, Morpholin, Diethylentriamin oder Tetraethylenpentamin. Die Copolymerisate enthalten mindestens ein Monomer aus der Gruppe b) in einer Menge von 95 bis 0, vorzugsweise 70 bis 0 Mol-% in einpolymerisierter Form.

Die Copolymerisate aus den Monomeren a) und b) können gegebenenfalls dadurch modifiziert werden, daß man bei der Copolymerisation mindestens eine andere monoethylenisch ungesättigte Verbindung, die mit den Monomeren a) und b) copolymerisierbar ist, einsetzt. Geeignete Monomere der Gruppe c) sind beispielsweise die Ester, Amide und Nitrile der unter a) angegebenen Carbonsäuren, z.B. Acrylsäuremethylester, Acrylsäureethylester, Methacrylsäuremethylester, Methacrylsäureethylester, Acrylsäure-n-butylester, Hydroxyethylacrylat, 2- oder 3-Hydroxypropylacrylat, 2- oder 4-Hydroxybutylacrylat, Hydroxyethylmethacrylat, 2- oder 3-Hydroxypropylmethacrylat, Hydroxyisobutylacrylat, Hydroxyisobutylmethacrylat, Maleinsäuremonomethylester, Maleinsäuredimethylester, Maleinsäuremonoethylester, Maleinsäurediethylester, 2-Ethylhexylacrylat, 2-Ethylhexylmethacrylat, Acrylamid, Methacrylamid, N,N-Dimethylacrylamid, N-tertiär-Butylacrylamid, Acrylnitril, Methacrylnitril, 2-Dimethylaminoethylacrylat, 2-Dimethylaminoethylmethacrylat, 2-Diethylaminoethylacrylat, 2-Diethylaminoethylmethacrylat sowie die Salze der zuletzt genannten Monomeren mit Carbonsäuren oder Mineralsäuren sowie die quaternierten Produkte. Außerdem eignen sich als Monomere der Gruppe c) Acrylamidoglykolsäure, Vinylsulfonsäure, Allylsulfonsäure, Methallylsulfonsäure, Styrolsulfonsäure, Acrylsäure-(3-sulfopropyl)ester, Methacrylsäure-(3-sulfopropyl)ester und Acrylamidomethylpropansulfonsäure sowie Phosphonsäuregruppen enthaltende Monomere, wie Vinylphosphat, Allylphosphat und Acrylamidomethanpropanphosphonsäure. Weitere geeignete Verbindungen dieser Gruppe sind N-Vinyl-2-methylimidazolin, Vinylacetat und Vinylpropionat. Es ist selbstverständlich auch möglich, Mischungen der genannten Monomeren der Gruppe c) einzusetzen, z.B. Mischungen aus Acrylester und Vinylacetat, Mischungen aus verschiedenen Acrylestern, Mischungen aus Acrylestern und Acrylamid oder Mischungen aus Acrylamid und 2-Hydroxyethylacrylat. Von den Monomeren der Gruppe c) verwendet man vorzugsweise Acrylamid, Acrylnitril, Vinylacetat, N-Vinylimidazol oder Mischungen aus diesen Monomeren, z.B. Mischungen aus Acrylamid und Vinylacetat oder Mischungen Acrylamid und Acrylonitril. Sofern die Monomeren der Gruppe c) zur Modifizierung der Copolymerisate eingesetzt werden, sind sie in Mengen bis zu 30 Mol-% in den Copolymerisaten in einpolymerisierter Form vorhanden, vorzugsweise in Mengen von 1 bis 20 Mol-%.

Die (Co)polymerisate aus den Monomeren a), sowie b) und gegebenenfalls c) können weiterhin dadurch modifiziert werden, daß man die Copolymerisation in Gegenwart mindestens eines Monomeren der Gruppe d) vornimmt, bei der es sich um Verbindungen handelt, die mindestens zwei ethylenisch ungesättigte, nicht konjugierte Doppelbindungen im Molekül aufweisen. Die Mitverwendung der Monomere der Gruppe d) bei der Copolymerisation bewirkt eine Erhöhung der K-Werte (s.u.) der Copolymerisate. Geeignete Verbindungen der Gruppe d) sind beispielsweise Methylenbisacrylamid, Ester von Acrylsäure und Methacrylsäure mit mehrwertigen Alkoholen, wie z.B. Glykoldiacrylat, Glycerintriacrylat, Glycoldimethacrylat, Glycerintrimethacrylat sowie mindestens zweifach mit Acrylsäure oder Methacrylsäure veresterte Polyethylenglykole oder Polyole, wie Pentaerythrit und Glucose. Geeignete Vernetzer sind außerdem Divinylbenzol, Divinyldioxan, Trimethylolpropan, Trimethylolethan, Pentaerythrittriallylether, Pentaallylsucrose und Diallylammoniumchlorid. Vorzugsweise verwendet man aus dieser Gruppe von Verbindungen wasserlösliche Monomere, wie Glykoldiacrylat oder Glykoldiacrylate von Polyethylenglykolen eines Molekulargewichts bis zu 3.000. Sofern die Monomeren der Gruppe d) zur Modifizierung der Copolymerisate eingesetzt werden, betragen die angewendeten Mengen bis zu 2 Mol-%. Im Falle ihres Einsatzes sind sie vorzugsweise zu 0,01 bis 1 Mol-% in den Copolymerisaten in einpolymerisierter Form enthalten.

Bevorzugt ist die Verwendung von Verbindungen, die durch (Co) Polymerisieren von
a) 30 bis 100 Mol-% N-Vinylformamid, N-Vinylacetamid, N-Methyl-N-vinylformamid, N-Methyl-N-vinylacetamid, N-Vinylpyrrolidon oder N-Vinylcaprolactam oder deren Mischungen,
b) 70 bis 0 Mol-% Acrylsäure, Methacrylsäure und/oder deren Alkalimetall-, Erdalkalimetall-, Ammonium- oder Aminsalzen oder deren Mischungen und
c) 0 bis 30 Mol-% Acrylamid, Acrylnitril, Vinylacetat, N-Vinylimidazol oder deren Mischungen,
wobei die Summe immer 100 mol% beträgt, und gegebenenfalls anschließender partieller oder vollständiger Hydrolyse der einpolymerisierten N-Vinylcarbonsäureamideinheiten, erhältlich sind.

Beispielhaft genannt seien Homopolymere aus N-Vinylformamid, Copolymerisate aus N-Vinylformamid, Acrylsäure und Acrylamid, aus N-Vinylformamid, Acrylsäure und Acrylnitril, aus N-Vinylformamid, Acrylsäure und Vinylacetat, aus N-Vinylformamid, Acrylsäure und N-Vinylpyrrolidon, aus N-Vinylformamid, Acrylsäure, Acrylnitril und Vinylacetat oder aus N-Vinylformamid, Acrylsäure, Acrylamid und Arynitril. In den zuletzt beschriebenen Copolymerisaten kann die Acrylsäure ganz oder teilweise durch Methacrylsäure ersetzt sein. Acrylsäure oder Methacrylsäure können partiell oder vollständig mit Natronlauge, Kalilauge, Calciumhydroxid oder Ammoniak neutralisiert sein.

Die Herstellung der (Co) polymerisate erfolgt nach bekannten radikalischen Verfahren, z.B. der Lösungs-, Fällungs-, Suspensions- oder Emulsionspolymerisation unter Verwendung von Verbindungen, die unter den Polymerisationsbedingungen Radikale bilden.

Die Polymerisationstemperaturen liegen üblicherweise in dem Bereich von 30 bis 200, vorzugsweise 40 bis 110, besonders bevorzugt 40 bis 100 °C, gegebenenfalls bei vermindertem oder erhöhtem Druck. Geeignete Initiatoren sind beispielsweise Azo- und Peroxyverbindungen sowie die üblichen Redoxinitiatorsysteme, wie Kombinationen aus Wasserstoffperoxyd und reduzierend wirkenden Verbindungen, z.B. Natriumsulfit, Natriumbisulfit, Natriumformaldehydsulfoxilat und Hydrazin. Diese Systeme können gegebenenfalls zusätzlich noch geringe Mengen eines Schwermetallsalzes enthalten.

Die (Co) polymerisate werden bevorzugt durch Lösungspolymerisation in Wasser hergestellt, wobei man die Monomeren der Gruppe b) vorzugsweise in der Salzform einsetzt und den pH-Wert während der Polymerisation zwischen 4 und 10, bevorzugt zwischen 6 und 8 hält. Um den pH-Wert während der Copolymerisation konstant zu halten, ist es zweckmäßig, geringe Mengen, z.B. 0,5 bis 2 Gew.-%, eines Puffers, wie beispielsweise Dinatriumhydrogenphosphat zuzusetzen. Als Polymerisationsinitiator werden vorzugsweise wasserlösliche Azoverbindungen, wie 2,2'-Azobis(2-methylpropionamidin)dihydrochlorid, 2,2'-Azobis-(4-Methoxy-2,4-dimethylvaleronitril), 2,2'-Azobis-(2-methyl-N-phenylpropionamidin)dihydrochlorid, 2,2'-Azo-bis(isobutyronitril), 2,2'-Azobis-(2-amidinopropan)-hydrochlorid oder 4,4'-Azo-bis-(4'-cyan-pentansäure) verwendet.

Die genannten Verbindungen werden meist in Form wäßriger Lösungen oder Dispersionen eingesetzt, wobei die untere Konzentration durch die in der (Co) Polymerisation vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Dispersion wird in dieser Schrift als übergeordneter Begriff gemäß Römpp Chemie Lexikon - CD Version 1.0, Stuttgart/New York: Georg Thieme Verlag, 1995, verwendet und schließt Emulsionen, Suspensionen und Lösungen mit ein.

Die Menge der Initiatoren beträgt im allgemeinen 0, 1 bis 10 Gew.-%, bevorzugt 0,5 bis 5 Gew.-%, bezogen auf die zu (co)polymerisierenden Monomeren. Es können auch mehrere, verschiedene Initiatoren bei der (Co) Polymerisation Verwendung finden.

Als Lösungs- oder Verdünnungsmittel für die Polymerisation können z. B. dienen Wasser, Alkohole, wie Methanol, Ethanol, n- oder iso-Propanol, n- oder iso-Butanol, oder Ketone, wie Aceton, Ethylmethylketon, Diethylketon oder *iso*-Butylmethylketon.

Um niedrigmolekulare (Co) polymerisate herzustellen, führt man die (Co) polymerisation in Gegenwart eines Reglers durch. Geeignete Regler sind beispielsweise sekundäre Akohole, wie Isopropanol und sek.-Butanol, Hydroxylamin, Ameisensäure sowie Mercaptoverbindungen, wie Mercaptoethanol, Mercaptopropanol, Mercaptobutanol, Thioglykolsäure, Thiomilchsäure, tert.-Butylmercaptan, Octylmercaptan und Dodecylmercaptan. Die Regler werden üblicherweise in Mengen von 0,01 bis 5 Gew.-%, bezogen auf die eingesetzten Monomeren, angewendet. Sofern man sekundäre Alkohole als Regler verwendet, kann die (Co) polymerisation auch in Gegenwart wesentlich größerer Mengen erfolgen, z.B, in Mengen bis zu 80 Gew.-%, bezogen auf die Monomeren.
In diesen Fällen sind die sekundären Alkohole gleichzeitig Lösemittel für die Monomere.

Die so erhältlichen (Co) polymerisate haben in der Regel K-Werte von 20 bis 300, vorzugsweise 50 bis 250. Die in dieser Schrift angegebenen K-Werte werden bestimmt nach H.Fikentscher in 5 %iger wäßriger Kochsalzlösung bei pH 7, 25°C und einer Polymerkonzentration von 0,1 Gew.-%.

Die (Co)Polymerisation kann aber auch in anderer, dem Fachmann an sich bekannter Weise durchgeführt werden, z.B. als Lösungs-, Fällungs-, Wasser-in-Öl-Emulsions- oder umgekehrte Suspensionspolymerisation. Bevorzugt ist die Lösungspolymerisation.

Bei der Emulsionspolymerisation werden ionische und/oder nicht-ionische Emulgatoren und/oder Schutzkolloide bzw. Stabilisatoren als grenzflächenaktive Verbindungen verwendet.

Je nach Polymerisationsbedingungen erhält man bei der (Co) Polymerisation (Co) Polymerisate eines unterschiedlichen Molekulargewichtes, das in dieser Schrift mit Hilfe der K-Werte nach Fikentscher charakterisiert wird. (Co)Polymerisate mit einem hohen K-Wert, z.B. oberhalb von 80, werden vorzugsweise durch (Co) Polymerisieren des N-Vinylylcarbonsäureamids, beispielsweise der Formel (IIa), in Wasser hergestellt. (Co) Polymerisate mit einem hohen K-Wert erhält man darüberhinaus beispielsweise durch (Co) Polymerisieren der Monomere in Form der umgekehrten Suspensionspolymerisation oder durch (Co) Polymerisieren der Monomere nach dem Verfahren der Wasser-in-Öl-Polymerisation.

Bei dem Verfahren der umgekehrten Suspensionspolymerisation sowie der Wasser-in-Öl-Polymerisation verwendet man als Ölphase gesättigte Kohlenwasserstoffe, beispielsweise Hexan, Heptan, Cyclohexan, Dekalin oder aromatische Kohlenwasserstoffe, wie Benzol, Toluol, Xylol und Cumol. Das Verhältnis von Ölphase zu wäßriger Phase beträgt bei der umgekehrten Suspensions polymerisation beispielsweise 10:1 bis 1:10.

(Co) Polymerisate mit einem niedrigen K-Wert, z.B. unterhalb von 80, erhält man, wenn man die (Co) Polymerisation in Gegenwart von Polymerisationsreglern oder in einem Lösungsmittel durchführt, das die (Co) Polymerisation regelt, z.B. Alkohole, wie Methanol, Ethanol, n- oder iso-Propanol, oder Ketone, wie Aceton, Ethylmethylketon, Diethylketon oder *iso*-Butylmethylketon.

(Co) polymerisate mit niedrigen Molekulargewichten und entsprechend niedrigen K-Werten erhält man weiterhin mit Hilfe der üblichen Methoden, d.h. Einsatz größerer Mengen an Polymerisationsinitiator oder Verwendung von Polymerisationsreglern oder Kombinationen der genannten Maßnahmen.

Das Molekulargewicht der erfindungsgemäß einsetzbaren (Co) Polymerisate ist nicht beschränkt. Bevorzugt werden (Co) Polymerisate mit K-Werten zwischen 20 und 150, wobei K-Werte zwischen 30 und 100 besonders bevorzugt sind.

Die N-Vinylcarbonsäureamide, beispielsweise der Formel (IIa) und besonders N-Vinylformamid, in einpolymerisierter Form enthaltenden (Co) Polymerisate können erfindungsgemäß sowohl in teilweise oder vollständig gespaltener als auch in ungespaltener Form eingesetzt werden. Bevorzugt ist ein Hydrolysegrad der Carbonsäuregruppe zwischen 5 und 90 Mol%, besonders bevorzugt zwischen 10 und 50 Mol%, bezogen auf die im (Co) polymer enthaltenen N-Carbonsäureamideinheiten.

Weitere kationische Polyelektrolyte ii), sind bekannt. Verwenden kann man beispielsweise Polymere die unter den chemischen Trivialnamen kationisches Polyvinylformamid, kationisches Polyvinylpyrrolidon, kationisches Polyvinylacetamid, kationisches Polyvinylmethylformamid, kationisches Polyvinylmethylacetamid, Poly(amidoamin-epichlorhydrin)bekannt sind. Copolymere, die N-Vinylformamid, Allylamin, Diallyldimethylammoniumchlorid, N-Vinylacetamid, N-Vinylpyrrolidon, N-Methyl-N-vinylformamid, N-Methyl-N-vinylacetamid, Dimethylaminopropylmethacrylamid, Dimethylaminoethylacrylat, Diethylaminoethylacrylat, Acryloylethyltrimethylammoniumchlorid oder Methacrylamidopropyltrimethylammoniumchlorid in einpolymerisierter Form und gegebenenfalls in gespaltener Form enthalten, sowie deren Salze, wenn es sich umbasische Polymere handelt, können erfindungsgemäß verwendet werden, solange diese Copolymere mindestens ein N-Vinylcarbonsäureamid einpolymerisiert enthalten. Bevorzugt sind dabei kationische Polyvinylformamide.

Die Herstellung der kationischen Polyelektrolyte ist seit langem bestens bekannt.

Die bei dem erfindungsgemäßen Verfahren verwendbaren kationischen Polyelektrolyte ii) haben unterschiedliche Molekulargewichte, die in dieser Schrift mit Hilfe der K-Werte nach Fikentscher charakterisiert werden. Die Molekulargewichte der erfindungsgemäß einsetzbaren kationischen Polyelektrolyte sind nicht beschränkt. In der Regel haben sie K-Werte von 20 bis 200, vorzugsweise 30 bis 150, besonders bevorzugt 40 bis 100. Die in dieser Schrift angegebenen K-Werte werden bestimmt nach H.Fikentscher in 5 %iger wäßriger Kochsalzlösung bei pH 7, 25°C und einer Polymerkonzentration von 0,1 Gew.-%.

Die ganz besonders bevorzugten kationischen Polyvinylformamide mit der allgemeinen Polymerformel (I), 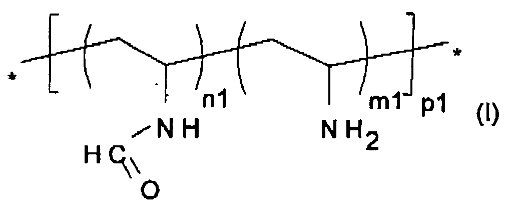 in der das Verhältnis von n₁ : m₁ bezogen auf das gesamte Polymer Werte von 99 : 1 bis 1 : 99 betragen und p₁ Werte zwischen 30 und 30000 einnehmen kann, oder deren Salze, werden hergestellt, indem man N-Vinylformamid der Formel (II) 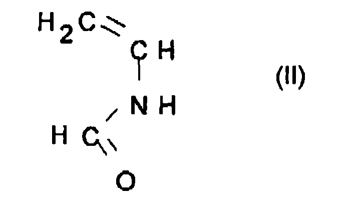 zu einem Polyvinylformamid der Formel (III) polymerisiert und dieses unter Entfernung der Formylgruppe teilweise zum Copolymeren (I) spaltet. 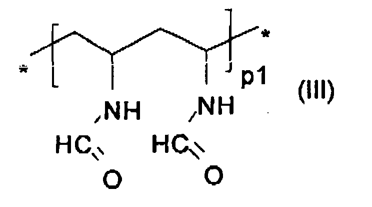 Bevorzugt ist ein Hydrolysegrad der Carbonsäuregruppe zwischen 5 und 90 Mol% und besonders bevorzugt zwischen 10 und 50 Mol%, bezogen auf die im (Co) Polymer enthaltenen N-Carbonsäureamid-einheiten. Die Art der Abspaltung der Formylgruppe ist dabei nicht beschränkt, sie kann beispielsweise in Gegenwart von Säure oder Base erfolgen, bevorzugt ist die Spaltung in Gegenwart von Basen, wie beispielsweise Natriumhydroxid, Kaliumhydroxid, Erdalkalimetallhydroxide, Ammoniak oder Amine. Dabei können durch Teilhydrolyse, z.B. eines (Meth)acrylate und N-Alkyl-N-vinylcarbonsäureamide in einpolymerisierter Form enthaltenden Copolymers, amphotere (Co)Polymere entstehen.

Besonders einfach erhält man kationische Polymerisate von N-Vinylformamid dadurch, daß man Homopolymerisate von N-Vinylformamid oder N-Vinylformamid in einpolymerisierter Form enthaltende Copolymere mit definierten Mengen von Säure oder Base hydrolytisch zu dem gewünschten Hydrolysegrad spaltet, wie in der EP-B1 071 050 beschrieben. Die dabei an der Polymerkette entstehenden Aminogruppen sind je nach pH-Wert der Lösung mehr oder weniger protoniert und verleihen damit dem Polymeren einen mehr oder weniger kationischen Charakter.

Wird nach der (Co) Polymerisation eine Abspaltung der Carbonsäure bzw.
Formylgruppe gewünscht, so kann diese beispielsweise in Wasser durchgeführt werden.

Die Abspaltung der Carbonsäure bzw. Formylgruppe in der Hydrolyse erfolgt bei Temperaturen in dem Bereich von 20 bis 200, vorzugsweise 40 bis 180°C, in Gegenwart von Säuren oder Basen. Die Hydrolyse in Gegenwart von Säuren oder Basen wird besonders bevorzugt in dem Temperaturbereich von 70 bis 90°C durchgeführt.

Pro Carbonsäure- bzw. Formylgruppenäquivalent im Poly-N-vinylformamid benötigt man für die saure Hydrolyse etwa 0,05 bis 1,5 Äquivalente einer Säure, wie Salzsäure, Bromwasserstoffsäure, Phosphorsäure, Schwefelsäure. Der pH-Wert bei der sauren Hydrolyse liegt in dem Bereich von 2 bis 0, vorzugsweise bei 1 bis 0. Die Hydrolyse von N-Vinylformamid verläuft wesentlich rascher als die von (Co) Polymerisaten anderer N-Vinylcarbonsäureamide, wie z. B. des N-Methyl-N-Vinylformamids, und kann daher unter schonenderen Bedingungen, d.h. bei niedrigeren Temperaturen und ohne einen hohen Überschuß von Säuren, durchgeführt werden.

Darüberhinaus läßt sich die Hydrolyse der Formylgruppen des Poly-N-Alkyl-N-vinylcarbonsäureamids auch in alkalischem Medium durchführen, z.B. in dem pH-Bereich von 11 bis 14. Dieser pH-Wert wird vorzugsweise durch Zugabe von Alkalimetallbasen, wie z.B. Natronlauge oder Kalilauge eingestellt. Es ist jedoch auch möglich Ammoniak, Amine und/oder Erdalkalimetallbasen zu verwenden. Für die alkalische Hydrolyse verwendet man 0,05 bis 1,5, vorzugsweise 0,4 bis 1,0 Äquivalente einer Base.

Die Spaltung kann auch bei hohen Temperaturen, beispielsweise über 100°C, bevorzugt 120 bis 180°C, besonders bevorzugt 140 bis 160°C in Gegenwart eines Lösungsmittels, z.B. Wasser, ohne Säure oder Base durchgeführt werden. Bevorzugt wird dies bei Bedingungen oberhalb des kritischen Punktes durchgeführt, beispielsweise mit überkritischem Wasser.

Bei der Hydrolyse, d.h. die Carbonsäure- bzw. Formylgruppe wird in Wasser in Gegenwart von Säuren oder Basen aus dem Poly-N-vinylcarbonsäureamid abgespalten, erhält man als Nebenprodukt Carbonsäure, beispielsweise Ameisensäure, beziehungsweise deren Salze.

Die so erhältlichen Lösungen können ohne weitere Aufarbeitung in das erfindungsgemäße Verfahren eingesetzt werden, die Hydrolysebeziehungsweise Solvolyseprodukte können aber auch abgetrennt werden.

Zur Abtrennung werden die erhaltenen Lösungen beispielsweise mit Ionentauschern behandelt. Der von den Hydrolyseprodukten abgetrennte Rückstand kann dann erfindungsgemäß verwendet werden.

Auch die anderen oben als Beispiele erwähnten kationischen Polyelektrolyte sind seit vielen Jahren bekannt.

Für das erfindungsgemäße Verfahren und die erfindungsgemäßen Mischungen können natürlich auch kationische Polyelektrolyte verwendet werden, die durch Copolymerisation der bereits genannten Ausgangsmonomeren erhältlich sind. Z.B. kann man auch Copolymere, die vinylformamid (Formel (II)) und Diallyldimethylammoniumchlorid oder Vinylformamid und basische Acrylate in einpolymerisierter Form enthalten, wie sie in der EP 0464043 B1 beschrieben sind, verwenden.

Die Löslichkeit in dem verwendeten Lösungsmittel iii) der erfindungsgemäß einsetzbaren (Co) polymere, die N-Vinylcarbonsäureamide einpolymerisiert enthalten und anderer kationischer Polyelektrolyte beträgt bei 20°C in der Regel mindestens 1 Gew% bis zur vollständigen Löslichkeit.

Die Mischungsverhältnisse in den Mischungen A aus den optischen Aufhellern und den (Co) polymeren, die N-Vinylcarbonsäureamide einpolymerisiert enthalten können sich zwischen 1: 2, 5 und 1: 75 bewegen, doch ist ein deutlicher Überschuß an kationischen Polyelektrolyten von Vorteil. Besonders vorteilhaft sind Mischungen von 1:2,5 bis 1:50, ganz besonders bevorzugt von 1:5 bis 1:20.

Die optischen Aufheller i) , die in den Mischungen A verwendet werden können, sind nicht beschränkt. Beispielsweise können solche Aufheller verwendet werden, wie sie in Ullmann's Encyclopedia of Industrial Chemistry, Sixth Edition, 2000 Electronic Release, OPTICAL BRIGHTENERS - Chemistry of Technical Products beschrieben sind.

Geeignete optische Aufheller i) gehören beispielsweise zur Gruppe der Distyrylbenzole, beispielsweise Cyano-substitutierte 1,4-Distyrylbenzole mit Cyanogruppen in den Positionen 2' und 3" [CAS-RegNr. 79026-03-2], bzw in Position 2' und 2" [13001-38-2], 3' und 3" [36755-00-7], 3' und 4" [79026-02-1] sowie 4' und 4" [13001-40-6], oder amphotere Verbindungen, wie z.B. [84196-71-4], die in 2' und 2" -Position jeweils eine Gruppe

-O- (CH₂) ₂-N⁺ (C₂H₅) ₂-CH₂COO⁻

tragen, zur Gruppe der Distyrylbiphenyle, beispielsweise 4,4'-Di(2-sulfostyryl)biphenyl dinatriumsalz [27344-41-8], 4,4'-Di(3-sulfostyryl)biphenyl dinatriumsalz [51119-63-2], 4,4'-Di(4-chloro-3-sulfostyryl)biphenyl dinatriumsalz [42380-62-1], 4,4'-Di(6-chloro-3-sulfostyryl)biphenyl dinatriumsalz [60477-28-3], 4,4'-Di(2-methoxystyryl)biphenyl [40470-68-6] oder ein 4,4'-di(styryl)biphenyl, das in Position 2 am Styrylrest eine Gruppe

-O-(CH₂)₂-N⁺(CH₃)(C₂H₅)₂·CH₃OSO₃⁻

trägt[72796-88-4], zur Gruppe der Divinylstilbene, beispielsweise 4,4'-Di(ethoxycarbonylvinyl)stilben [60683-03-6] oder 4,4'-Di(cyanovinyl)stilben [60682-87-3], zur Gruppe der Triazinylaminostilbene, z.B. 1,3,5-Triazinylderivate der 4,4'-Diaminostilbene-2,2'-disulfonsäure, wie Anilinoderivate die an den Triazin-Ringen jeweils in Position 3 folgende Reste tragen: einen Methoxyrest (CAS-RegNr. [3426-43-5]), Aminomethyl [35632-99-6], Ethylamino [24565-13-7], Hydroxyethylamino [12224-16-7], N-Hydroxyethyl-N-methylamino [13863-31-5], Bis-(Hydroxyethyl)amino [4193-55-9], Morpholino [16090-02-1], Phenylamino [133-66-4], N-2-Aminocarbonylethyl-N-2-hydroxyethylamino [68444-86-0] oder wie Anilinosulfonsäurederivate die an den Triazin-Ringen jeweils in Position 3 folgende Reste tragen: N-Hydroxyethylamino- und zusätzlich an der in position 5 des Triazinringes stehenden Anilinogruppe eine Sulfonsäuregruppe in Position 3 (CAS-RegNr. [61968-9]), N-Bis(hydroxyethyl)amino- und zusätzlich an der Anilinogruppe eine Sulfonsäuregruppe in Position 3 (CAS-RegNr. [12224-02-1]), N-Bis(2-hydroxypropyl)amino- und zusätzlich an der Anilinogruppe eine Sulfonsäuregruppe in Position 4 (CAS-RegNr. [99549-42-5]), N-Bis(hydroxyethyl)amino- und zusätzlich an der Anilinogruppe eine Sulfonsäuregruppe in Position 4 (CAS-RegNr. [16470-24-9]), N-Hydroxyethyl-N-methyl-amino- und zusätzlich an der Anilinogruppe eine Sulfonsäuregruppe in Position 4 (CAS-RegNr. [74228-28-7]), Diethylamino- und zusätzlich an der Anilinogruppe Sulfonsäuregruppen in Position 2 und 5 (CAS-RegNr. [83512-97-4]), N-Bis(hydroxyethyl)amino- und zusätzlich an der Anilinogruppe Sulfonsäuregruppen in Position 2 und 5 (CAS-RegNr. [76482-78-5]), oder Morpholinogruppen und zusätzlich an der Anilinogruppe Sulfonsäuregruppen in Position 2 und 5 (CAS-RegNr. [55585-28-9]), oder zur Gruppe der Stilbenyl-2H-triazole, z.B. Stilbenyl-2H-naphtho[1,2-d ]triazole wie das Natriumsalz der 4-(2H-Naphtho[1,2-d]triazol-2-yl) stilben-2-sulfonsäure [6416-68-8] oder solche, die in Position 6 am Naphtholring und an Position 2 des Stilbengerüsts eine Sulfonsäure tragen [2583-80-4], beziehungsweise am Stilbengerust in Position 2 eine Cyanogruppe und in Position 4' eine Chlorgruppe tragen [5516-20-1] oder z.B. Bis(1,2,3-triazol-2-yl)stilbene, wie z.B. 4,4'-Bis(4-phenyl-1,2,3-triazol-2-yl)stilben-2,2'-disulfonsäure dikaliumsalz [52237-03-3] oder 4,4'-Bis(4-(4'-sulfophenyl)-1,2,3-triazol-2-yl)stilben-2,2'-disulfonsä ure tetranatriumsalz [61968-72-7], oder zur Gruppe der Benzoxazole, z.B. Stilbenylbenzoxazole, beispielsweise 5,7-Dimethyl-2-(4'-phenylstilben-4-yl)benzoxazol [40704-04-9], 5-Methyl-2-(4'-(4"-methoxycarbonyl)-phenylstilben-4-yl)benzoxazol [18039-18-4] oder solche, die in 4"-Position sonstige Heterocyclen tragen, wie z.B. [64893-28-3], oder Bis(benzoxazole), z.B. Ethylen-, Thiophen-, Naphthylen-, Phenylethylen- oder Stilbenverbrückte Bis-Benzoxazole, wie solche mit den CAS-Nummern [1041-00-5], [2866-43-5], [7128-64-5], [5089-22-5], [1552-46-1], [1533-45-5] oder [5242-49-9].

Weiterhin können verwendet werden Furane, Benzo[b]furane and Benzimidazole, wie z.B. Bis(benzo[b]furan-2-yl)biphenyle, beispielsweise sulfonierte 4,4'-bis(benzo[b]furan-2-yl)biphenyle oder kationische Benzimidazole, beispielsweise 2,5-Di(1-methylbenzimidazol-2-yl)furan [4751-43-3], [72829-17-5], [74878-56-1], [74878-48-1] oder [66371-25-3], oder 1,3-biphenyl-2-pyrazoline, z.B. 1-(4-Amidosulfonylphenyl)-3-(4-chlorophenyl)-2-pyrazolin [2744-49-2], [60650-43-3], [3656-22-2], [27441-70-9], [32020-25-0], [61931-42-8] oder [81209-71-4], sowie tertiäre und quaternäre Aminsalze von 1,3-Diphenyl-2-pyrazolinderivaten, z.B. [106359-93-7], [85154-08-1], [42952-22-7], [63310-12-3], [12270-54-1] oder [36086-26-7], sowie Cumarine, wie z.B. 7-Diethylamino-4-methylcumarin [91-44-1] sowie [6025-18-9], [19663-09-1], [3333-62-8], [63660-99-1], [26867-94-7] oder [52725-14-1] sowie Naphthalimide, wie z.B. 4-Acetylamino-N-(n-butyl)naphthalimid [3353-99-9], 4-Methoxy-N-methylnaphthalimid [3271-05-4], [3271-05-4], [22330-48-9], [25826-31-7], [26848-65-7] oder [60317-11-5] sowie 1,3,5-Triazin-2-yl Derivative, beispielsweise (4,6-Dimethoxy-1,3,5-triazin-2-yl)pyren [3271-22-5] oder 4,4'-Di(4,6-diphenyl-1,3,5-triazin-2-yl)stilben [6888-33-1].

Bevorzugt können 4,4'-Distyrylbiphenylderivate oder Stilbenderivate, die mit bis zu 6, besonders bevorzugt mit 2, 4 oder 6 Sulfonsäuregruppen substituiert sind, verwendet werden, bevorzugt die Blankophor®-Marken der Firma Bayer AG, besonders bevorzugt sind Blankophor^{®} P und Blankophor^{®} PSG, bevorzugt sind weiterhin die Tinopal®-Marken der Firma Ciba Specialty Chemicals, besonders bevorzugt Tinopal^{®} MC liquid, Tinopal^{®} ABP-Z liquid, Tinopal^{®} SPP-Z liquid und Tinopal^{®} SK-B liquid und weiterhin bevorzugt sind die Leukophor®-Marken der Firma Clariant AG, besonders bevorzugt Leukophor® APN, UO, NS oder SHR.

Als kationische Polyelektrolyte ii) sindsolche in den Mischungen A einsetzbar, wie sie oben beschrieben sind.

Als Lösungsmittel iii) für die erfindungsgemäßen Mischungen A sind beispielsweise Wasser, Methanol, Ethanol, iso-Propanol, n-Propanol, n-Butanol, Dimethylformamid oder N-Methylpyrrolidon geeignet, bevorzugt ist Wasser. Die Konzentration sollte so gewählt werden, daß das jeweilige Auftragsverfahren bedingt durch z.B. die Viskosität der aufzutragenden Mischung optimal durchgeführt werden kann. Optimale Viskositäten für verschiedene Auftragsverfahren sind dem Fachmann bekannt.

Die erfindungsgemäßen Konzentrationen des Lösungsmittels liegen im Bereich von 83 bis 94,8 Gew.-%.

Das Molekulargewicht der erfindungsgemäß einsetzbaren kationischen Polyelektrolyte ist, wie oben ausgeführt, nicht beschränkt, doch sollte es dem jeweiligen Auftragsverfahren angepaßt sein.

Dispersion wird in dieser Schrift als übergeordneter Begriff gemäß Römpp Chemie Lexikon - CD Version 1.0, Stuttgart/New York: Georg Thieme Verlag, 1995, verwendet und schließt Emulsionen, Suspensionen und Lösungen mit ein.

Bei der Mischung A kann es sich um eine Dispersion im Sinne der oben angeführten Definition aus dem Römpp-Lexikon handeln, bevorzugt um eine Lösung.

Das Aufbringen der erfindungsgemäßen Mischungen A auf die Oberfläche eines Naturpapiers,eines Streichrohpapiers oder eines gestrichen Papiers kann nach den für die Oberflächenbehandlung von Papier in der Papierindustrie üblichen Methoden erfolgen. Man kann dazu bekannte Auftragsaggregate verwenden, wie z.B. Filmpressen, Leimpressen, verschiedene Streichaggregate mit Rakeln, Schabern (engl. blades) oder Luftbürsten, oder auch Sprüheinrichtungen, wie sie z.B. für das Aufbringen von Stärke in der EP-A 373 276 oder für das Aufbringen von Streichmassen von V. Nissinen, Wochenblatt für Papierfabrikation, 2001, 11/12, S. 794 - 806, beschrieben werden. Das Auftragen der Mischungen kann aber auch bei der Kalandrierung von Papier über die Befeuchtungseinrichtungen erfolgen.

Das erfindungsgemäße Verfahren kann so ausgeübt werden, daß die Mischung A auf das Naturpapier oder auf das rohe, ungestrichene Papier oder auf das fertig gestrichene Papier, d.h. bei Aufbringen eines Strichs nach diesem, beziehungsweise bei Aufbringen mehrerer Striche z.B. Vor-, Mittel- und/oder Endstrich, nach einem dieser Striche, aufgebracht wird.

Das erfindungsgemäße Verfahren kann ein oder mehrmals ausgeübt werden, beispielsweise einmal bis dreimal, bevorzugt einmal bis zweimal undbesonders bevorzugt einmal.

Bei mehrfachem Aufbringen kann dies beispielsweise jeweils auf die gleiche Oberfläche aufgebracht werden oder auch auf verschiedene dieser Oberflächen, beispielsweise einmal auf das Rohpapier, einmal vor und einmal nach dem Endstrich, oder einmal nach dem Vorstrich, einmal nach dem Mittelstrich und einmal nach dem Endstrich oder einmal vor und einmal nach dem Endstrich.

Bevorzugt wird auf ein Naturpapier oder auf ein gestrichenes Papier nach dem Endstrich aufgebracht, besonders bevorzugt einmal bis zweimal und ganz besonders bevorzugt einmal.

Selbstverständlich können die verwendeten Papierstreichmassen ihrerseits Aktivatoren und optische Aufheller enthalten, beispielsweise Polyvinylalkohol, Carboxymethylcellulose, anionische oder nichtionische abgebaute Stärken, Kasein, Soja-Protein, wasserlösliche Styrol-Acrylat-Copolymerisate, Harnstoff-Formaldehyd-Harze, Melamin-Formaldehyd-Harze, Polyglykole, acrylesterhaltige Copolymerisate oder N-Vinylcarbonsäureamid in einpolymerisierter Form enthaltende (Co)polymere. Selbstverständlich kann die für das erfindungsgemäße Verfahren einsetzbare Mischung A neben den Komponenten i) , ii) und iii) noch andere papiertypische Hilfsmittel enthalten, soweit durch diese die Wechselwirkungen zwischen i)und ii) nicht negativ beeinflusst werden.

Die Mischung A kann weiterhin auch Pigmente enthalten, wie z.B. Satinweiß (Kalziumsulfoaluminat), Kalziumcarbonat in gemahlener oder gefällter (präzipitierter) Form, Bariumsulfat in gemahlener oder gefällter Form, Kaolin (Clay), kalzinierter Clay, Talkum, Zinkoxid, Silikate, oder organische Pigmente, z.B. Kunststoffe in Teilchenform, bevorzugt enthält die Mischung A aber keine Pigmente.

Die Menge, in der man die Mischung A entsprechend dem erfindungsgemäßen Verfahren auf das Papier aufbringt, kann in weiten Grenzen variieren. Im allgemeinen sollte man pro m² Papier eine Menge von 0, 05 g bis 5 g auftragen, bevorzugt eine Menge von 0,1 g bis 3 g, bezogen auf den kationischen Polyelektrolyten.
Nach dem Aufbringen der Mischung A auf das Natur- oder auf das rohe, vorgestrichene oder oder auf das fertig gestrichene Papier kann, z.B. durch Infrarotstrahler, getrocknet werden, um gegebenenfalls enthaltenes Lösungsmittel zu entfernen, und falls gewünscht, noch bei einer Temperatur zwischen 15 und 100°C kalandriert (satiniert) werden.

Wenn die MischungAnicht nur die Weiße des Papiers erhöhen, sondern zusätzlich auch die Ink-Jet-Bedruckbarkeit verbessern soll, empfiehlt es sich, die etwas höheren Auftragsmenge in den oben angegebenen Bereichen zu wählen, beispielsweise 0,1 bis 10 g, bevorzugt 0,2 bis 7 g und besonders bevorzugt 0,3 bis 3 g.

Die Mischungen können noch weitere dem Fachmann bekannte Bestandteile enthalten. In Betracht kommen z.B. Verlaufshilfsmittel, Verdicker, Benetzungshilfsmittel etc.

Die Mischungen A können weiterhin z. B. Dispergiermittel enthalten. Geeignete Dispergiermittel sind Polyanionen, beispielsweise von Polyphosphorsäuren oder von Polyacrylsäuren (Polysalze), welche üblicherweise in Mengen von 0,1 bis 3 Gew.-%, bezogen auf die Pigmentmenge, enthalten sind.

Die Mischungen A eignen sich zur Verwendung in der erfindungsgemäßen Behandlung von Aufzeichnungsmaterialien, bevorzugt Papier, Pappe oder Karton.

Die mit dem erfindungsgemäßen Verfahren behandelten Papiere, Pappen oder Kartons können in üblichen Verfahren, z.B. Offset-, Hoch- oder Tiefdruckverfahren, Flexodruckverfahren oder nach Digitaldruckverfahren, wie z.B. Laserdruck- oder Ink-Jet-Druckverfahren bedruckt werden.

Das erfindungsgemäße Verfahren erleichtert dem Fachmann die schwierige Aufgabe, mit relativ einfachen Mitteln und hoher Flexibilität hochweiße Papiere herzustellen, die mit verschiedenen Verfahren beschrieben und bedruckt werden können.

Die folgenden Beispiele sollen das erfindungsgemäße Verfahren erläutern, ohne es aber auf diese Beispiele einzuschränken.

Als "Teile", % und ppm seien in dieser Schrift, wenn nicht anders angegeben, "Gewichtsteile", Gew% und Gew.ppm verstanden.

### Beispiele

### Beispiele für Mischungen

Mischung 1: Wäßrige Lösung, enthaltend 10% eines Polyvinylformamids mit K-Wert ca.90 und Hydrolysegrad 10% und 0,5% (fest) eines optischen Aufhellers mit 6 Sulfonsäuregruppen (Tinopal^{®} SPP-Z liquid) . Die Viskosität, gemessen nach DIN 53 019, der Mischung beträgt 1710 mPa·s (Brookfield, 20 U/min) bzw. 1660 mPa·s (Brookfield, 100 U/min).

Mischung 2: Wäßrige Lösung, enthaltend 10% eines Polyvinylformamids mit K-Wert ca.90 und Hydrolysegrad 30% und 0,5% (fest) eines optischen Aufhellers mit 6 Sulfonsäuregruppen (Tinopal^{®} SPP-Z liquid). Die Viskosität, gemessen nach DIN 53 019, der Mischung beträgt 1000 mPa·s (Brookfield, 20 U/min) bzw. 974 mPa·s (Brookfield, 100 U/min).

Mischung 3: Wäßrige Lösung, enthaltend 10% eines Polyvinylformamids mit K-Wert ca. 90 und Hydrolysegrad 95% und 0, 5% (fest) eines optischenAufhellers mit 6 Sulfonsäuregruppen (Tinopal^{®} SPP-Z liquid). Die Viskosität, gemessen nach DIN 53 019, der Mischung beträgt 590 mPa·s (Brookfield, 20 U/min) bzw. 575 mPa·s (Brookfield, 100 U/min).

Mischung 4: Wäßrige Lösung, enthaltend 10% eines Polyvinylformamids mit K-Wert ca. 90 und Hydrolysegrad 10% und 0, 5% (fest) eines optischen Aufhellers mit 2 Sulfonsäuregruppen (Tinopal^{®} MC liquid) . Die Viskosität, gemessen nach DIN 53 019, der Mischung beträgt 1750 mPa·s (Brookfield, 20 U/min) bzw. 1590 mPa·s (Brookfield, 100 U/min) .

Mischung 5: Wäßrige Lösung, enthaltend 10% eines Polyvinylformamids mit K-Wert ca. 90 und Hydrolysegrad 30% und 0,5% (fest) eines optischenAufhellers mit 2 Sulfonsäuregruppen (Tinopal^{®} MC liquid). Die Viskosität, gemessen nach DIN 53 019, der Mischung beträgt 920 mPa·s (Brookfield, 20 U/min) bzw. 900 mPa·s (Brookfield, 100 U/min).

Mischung 6: Wäßrige Lösung, enthaltend 10% eines Polyvinylformamids mit K-Wert ca. 90 und Hydrolysegrad 95% und 0, 5% (fest) eines optischen Aufhellers mit 2 Sulfonsäuregruppen (Tinopal^{®} MC liquid). Die Viskosität, gemessen nach DIN 53 019, der Mischung beträgt 890 mPa·s (Brookfield, 20 U/min) bzw. 802 mPa·s (Brookfield, 100 U/min) .

Mischung 7: Wäßrige Lösung, enthaltend 10% eines kationischen Polyvinylpyrrolidons (Copolymerisat aus Vinylpyrrolidon und Vinylimidazol; Wirksubstanz des Produktes Luvitec^{®} VPI 55 K 72 W der Firma BASF Aktiengesellschaft) und 0,5% (fest) eines optischen Aufhellers mit 6 Sulfonsäuregruppen (Tinopal^{®} SPP-Z liquid). Die Viskosität, gemessen nach DIN 53 019, der Mischung beträgt 2080 mPa·s (Brookfield, 20 U/min) bzw. 1940 mPa·s (Brookfield, 100 U/min). Zur Anwendung wird diese Mischung auf 5% kationisches Polyacrylamid und 0,25% optischer Aufheller verdünnt.

Mischung 8: Wäßrige Lösung, enthaltend 10% eines Polyamidoamin-Epichlorhydrin-Harzes (Wirksubstanz des Produktes Luresin^{®} KNU der Firma BASF Aktiengesellschaft) und 0,5% (fest) eines optischen Aufhellers mit 6 Sulfonsäuregruppen (Tinopal^{®} SPP-Z liquid). Die Viskosität, gemessen nach DIN 53 019, derMischungbeträgt 25 mPa·s (Brookfield, 20 U/min) bzw. 32 mPa·s (Brookfield, 100 U/min).

Mischung 9: Wäßrige Lösung, enthaltend 10% eines Polyvinylformamids mit K-Wert ca. 45 und Hydrolysegrad 13% und 1,0% (fest) eines optischenAufhellers mit 4 Sulfonsäuregruppen (Tinopal^{®} ABP-Z liquid). Die Viskosität,gemessen nach DIN 53 019, der Mischung beträgt 73 mPa·s (Brookfield, 20 U/min) bzw. 92 mPa·s (Brookfield, 100 U/min).

Mischung 10: Wäßrige Lösung, enthaltend 5% eines Polyvinylformamids mit K-Wert ca. 90 und Hydrolysegrad 10% und 0,25% (fest) eines optischen Aufhellers mit 4 Sulfonsäuregruppen (Tinopal^{®} ABP-Z liquid). Die Viskosität, gemessen nach DIN 53 019, der Mischung beträgt 147 mPa·s (Brookfield, 20 U/min) bzw. 160 mPa·s (Brookfield, 100 U/min).

Mischung 11: Wäßrige Lösung, enthaltend 5% eines Polyvinylformamids mit K-Wert ca. 90 und Hydrolysegrad 30% und 0,25% (fest) eines optischen Aufhellers mit 4 Sulfonsäuregruppen (Tinopal^{®} ABP-Z liquid). Die Viskosität,gemessen nach DIN 53 019, der Mischung beträgt 100 mPa·s (Brookfield, 20 U/min) bzw. 113 mPa·s (Brookfield, 100 U/min).

Mischung 12: Wäßrige Lösung, enthaltend 5% eines Polyvinylformamids mit K-Wert ca. 90 und Hydrolysegrad 95% und 0,25% (fest) eines optischenAufhellers mit 4 Sulfonsäuregruppen (Tinopal^{®} ABP-Z liquid). Die Viskosität,gemessen nach DIN 53 019, der Mischung beträgt 70 mPa·s (Brookfield, 20 U/min) bzw. 91 mPa·s (Brookfield, 100 U/min) .

Mischung 13: Wäßrige Lösung, enthaltend 5 % eines kationischen Polyvinylpyrrolidons (Copolylmerisat aus Vinylpyrrolidon und Vinylimidazol; Wirksubstanz des Produktes Luvitec^{®} VPI 55 K 72 W der Firma BASF Aktiengesellschaft) und 0,25% (fest) eines optischen Aufhellers mit 4 Sulfonsäuregruppen (Tinopal^{®} ABP-Z liquid). Die Viskosität,gemessen nach DIN 53 019, der Mischung beträgt 125 mPa·s (Brookfield, 20 U/min) bzw. 133 mPa·s (Brookfield, 100 U/min).

### Beispiel 1

Auf ein handelsübliches holzfreies Streichrohpapier mit den in Tabelle 1 angegebenen optischen Eigenschaften wurden 10-prozentige (bzgl. Polymer) wäßrige Mischungen aus optischen Aufhellern und kationischen Polyelektrolyten mit dem Handrakel so aufgetragen, daß nach dem Trocknen 2 g/m² der Mischung auf dem Papier verblieben. Das Papier wurde entsprechend dem Stand der Technik getrocknet und mit einem Kalander satiniert. Die Weiße R 457 des Papiers wurde bestimmt nach DIN 53 145, Teil 2. Die CIE-Weiße des Papiers wurde gemessen nach ISO 24 69. Die Meßergebnisse können der Tabelle 1 entnommen werden.

**Tabelle 1**

| Auftrag von | Weiße R 457 | Weiße CIE |
|---|---|---|
| Ohne | 89,8 | 94,3 |
| Mischung 1 | 112,5 | 150,9 |
| Mischung 2 | 110,0 | 146,0 |
| Mischung 3 | 110,9 | 145,6 |

Aus den Meßwerten der Tabelle 1 erkennt der Fachmann, daß die erfindungsgemäße Verwendung der erfindungsgemäßen Mischungen eine ungewöhnlich große Steigerung der Weiße des Papiers bewirkt.

### Beispiel 2

Auf ein Papier, das mit 10 g/m² einer dem Stand der Technik entsprechenden Beschichtung versehen ist, die aus 100 Teilen Calciumcarbonat, 6 Teilen Stärke, 16 Teilen einer 50% igen Polymerdispersion (Styronal® D610 der Firma BASF AG) und kleineren Mengen Hilfsmitteln besteht, wurden 10-prozentige wäßrige Mischungen aus optischen Aufhellern und kationischen Polyelektrolyten mit dem Handrakel so aufgetragen, daß nach dem Trocknen 1,0 g/m² der Mischung auf dem Papier verblieben. Das Papier wurde entsprechend dem Stand der Technik getrocknet und kalandriert. Die Weiße R 457 des Papiers wurde bestimmt nach DIN 53 145, Teil 2. Die CIE-Weiße des Papiers wurde gemessen nach ISO 2469. Die Meßergebnisse können der Tabelle 2 entnommen werden.

**Tabelle 2**

| Auftrag von | Weiße R 457 | Weiße CIE |
|---|---|---|
| Ohne | 88,2 | 86,2 |
| Mischung 1 | 111,6 | 149,7 |
| Mischung 2 | 108,7 | 144, 7 |
| Mischung 3 | 108,9 | 143,0 |

Aus den Meßwerten der Tabelle 2 erkennt der Fachmann, daß die erfindungsgemäße Verwendung der erfindungsgemäßen Mischungen eine ungewöhnlich große Steigerung der Weiße des Papiers bewirkt.

### Beispiel 3

Auf ein handelsübliches holzfreies Streichrohpapier mit den in Tabelle 3 angegebenen optischen Eigenschaften wurden 10-prozentige wäßrige Mischungen aus optischen Aufhellern und kationischen Polyelektrolyten mit dem Handrakel so aufgetragen, daß nach dem Trocknen 2 g/ m² der Mischung auf dem Papier verblieben. Das Papier wurde entsprechend dem Stand der Technik getrocknet und mit einem Kalander satiniert. Die Weiße R 457 des Papiers wurde bestimmt nach DIN 53 145, Teil 2. Die CIE-Weiße des Papiers wurde gemessen nach ISO 2469. Die Meßergebnisse können der Tabelle 3 entnommen werden.

**Tabelle 3**

| Auftrag von | Weiße R 457 | Weiße CIE |
|---|---|---|
| Ohne | 89,8 | 95,1 |
| Mischung 4 | 104,6 | 134,7 |
| Mischung 5 | 105,4 | 136,1 |
| Mischung 6 | 110,4 | 144,5 |

Die Meßwerte der Tabelle 3 zeigen, daß die erfindungsgemäße Verwendung der erfindungsgemäßen Mischungen eine ungewöhnlich große Steigerung der Weiße des Papiers bewirkt.

### Beispiel 4

Auf ein Papier, das mit 10 g/m² einer Beschichtung versehen ist, die aus 100 Teilen Calciumcarbonat, 6 Teilen Stärke, 16 Teilen einer 50%igen Polymerdispersion (Styronal® D610 der Firma BASF AG) und kleineren Mengen Hilfsmitteln besteht, wurden 10-prozentige wäßrige Mischungen aus optischen Aufhellern und kationischen Polyelektrolyten mit dem Handrakel so aufgetragen, daß nach dem Trocknen 1,0 g/ m² der Mischung auf dem Papier verblieben. Das Papier wurde entsprechend dem Stand der Technik getrocknet und kalandriert. Die Weiße R 457 des Papiers wurde bestimmt nach DIN 53 145, Teil 2. Die CIE-Weiße des Papiers wurde gemessen nach ISO 2469. Die Meßergebnisse können der Tabelle 4 entnommen werden.

**Tabelle 4**

| Auftrag von | Weiße R 457 | Weiße CIE |
|---|---|---|
| Ohne | 88,6 | 87,8 |
| Mischung 4 | 106, 3 | 139,8 |
| Mischung 5 | 103,8 | 132,8 |
| Mischung 6 | 109,1 | 141,8 |

Aus der Tabelle 4 sieht man, daß die erfindungsgemäße Verwendung der erfindungsgemäßen Mischungen eine ungewöhnlich große Steigerung der Weiße des Papiers bewirkt.

### Beispiel 5

Auf ein handelsübliches holzfreies Streichrohpapier mit den in Tabelle 5 angegebenen optischen Eigenschaften wurden wäßrige Mischungen aus optischen Aufhellern und kationischen Polyelektrolyten mit dem Handrakel so aufgetragen, daß nach dem Trocknen 2 g/m²der Mischung auf dem Papier verblieben. Auf die gleiche Art wurde auch der optische Aufheller Tinopal SPP-Z liquid allein auf das Papier aufgetragen. Das Papier wurde entsprechend dem Stand der Technik getrocknet und mit einem Kalander satiniert. Die Weiße R 457 des Papiers wurde bestimmt nach DIN 53 145, Teil 2. Die CIE-Weiße des Papiers wurde gemessen nach ISO 2469. Die Meßergebnisse können der Tabelle 5 entnommen werden. Dabei sind auch die Farbwerte a* und b* des CIELAB-Systems angegeben, die den Farbton des Papiers beschreiben.

**Tabelle 5**

| Auftrag von | Weiße R 457 | Weiße CIE | CIELAB-System | |
|---|---|---|---|---|
| | | | Farbwert a* | Farbwert b* |
| Ohne | 89,7 | 93,8 | 0,79 | -1,41 |
| Nur Aufheller | 85,3 | 65,7 | -1,51 | 3,94 |
| Mischung 1 | 111,4 | 148,9 | 2,77 | -13,40 |
| Mischung 7 | 101,5 | 128,8 | 2,69 | -9,12 |
| Mischung 8 | 100,2 | 125,0 | 2,30 | -8,23 |

Aus der Tabelle 5 sieht man, daß die erfindungsgemäße Verwendung der erfindungsgemäßen Mischungen eine ungewöhnlich große Steigerung der Weiße des Papiers bewirkt. Man erkennt außerdem, daß das Aufbringen von optischem Aufheller allein zu einem Weißeverlust und durch Absenkung des a* und Anhebung des b*-Farbwerts zu der bekannten unerwünschten "Vergrünung" des Papiers führt.

### Beispiel 6

Auf ein Papier, das mit 10 g/m² einer Beschichtung versehen ist, die aus 100 Teilen Calciumcarbonat, 6 Teilen Stärke, 16 Teilen einer 50%igen Polymerdispersion (Styronal® D610 der Firma BASF AG) und kleineren Mengen Hilfsmitteln besteht, wurden wäßrige Mischungen aus optischen Aufhellern und kationischen Polyelektrolyten mit dem Handrakel so aufgetragen, daß nach dem Trocknen 1,0 g/ m² der Mischung auf dem Papier verblieben. Auf die gleiche Art wurde auch der optische Aufheller Tinopal SPP-Z liquid allein auf das Papier aufgetragen. Das Papier wurde entsprechend dem Stand der Technik getrocknet und kalandriert. Die Weiße R 457 des Papiers wurde bestimmt nach DIN 53 145, Teil 2. Die CIE-Weiße das Papiers wurde gemessen nach ISO 2469. Die Meßergebnisse können der Tabelle 6 entnommen werden. Dabei sind auch die Farbwerte a* und b* des CIELAB-Systems angegeben, die den Farbton des Papiers beschreiben.

**Tabelle 6**

| Auftrag von | Weiße R 457 | Weiße CIE | CIELAB-System | |
|---|---|---|---|---|
| | | | Farbwert a* | Farbwerte b* |
| Ohne | 88,4 | 87,8 | 0,56 | 0,06 |
| Nur Aufheller | 84,8 | 63,4 | -1,34 | 4,63 |
| Mischung 1 | 110, 5 | 147,3 | 2,83 | -13,08 |
| Mischung 7 | 99,2 | 121,4 | 2,51 | -7,27 |
| Mischung 8 | 99,1 | 120,2 | 2,37 | -6,96 |

Aus der Tabelle 6 sieht man, daß die erfindungsgemäße Verwendung der erfindungsgemäßen Mischungen eine ungewöhnlich große Steigerung der Weiße des Papiers bewirkt. Man erkennt außerdem, daß das Aufbringen von optischem Aufheller allein zu einem Weißeverlust und zu der bekannten unerwünschten "Vergrünung" des Papiers führt.

### Beispiel 7

Auf ein handelsübliches holzfreies Streichrohpapier mit den in Tabelle 7 angegebenen optischen Eigenschaften wurden wäßrige Mischungen aus optischen Aufhellern und kationischen Polyelektrolyten mit dem Handrakel so autgetragen, daß nach demTrocknen 2g/m² der Mischung auf dem Papier verblieben. Das Papier wurde entsprechend dem Stand der Technik getrocknet und mit einem Kalander satiniert. Die Weiße R 457 des Papiers wurde bestimmt nach DIN 53 145, Teil 2. Die CIE-Weiße des Papiers wurde gemessen nach ISO 2469. Die Meßergebnisse können der Tabelle 7 entnommen werden.

**Tabelle 7**

| Auftrag von | Weiße R 457 | Weiße CIE |
|---|---|---|
| Ohne | 89, 2 | 94,1 |
| Mischung 9 | 105, 3 | 131,1 |
| Mischung 10 | 101,7 | 127,1 |
| Mischung 11 | 101,7 | 127,7 |
| Mischung 12 | 101,1 | 126,1 |
| Mischung 13 | 104,7 | 136,4 |

### Beispiel 8

Auf ein Papier, das mit 10 g/m² einer dem Stand der Technik entsprechenden Beschichtung versehen ist, die aus 100 Teilen Calciumcarbonat, 6 Teilen Stärke, 16 Teilen einer 50%gen Polymerdispersion (Styronal® D610 der Firma BASFAG) und kleineren Mengen Hilfsmitteln besteht, wurden wäßrige Mischungen aus optischen Aufhellern und kationischen Polyelektrolyten mit dem Handrakel so aufgetragen, daß nach dem Trocknen 1,0 g/m² der Mischung auf dem Papier verblieben. Das Papier wurde entsprechend dem Stand der Technik getrocknet und kalandriert. Die Weiße R 457 des Papiers wurde bestimmt nach DIN 53 145, Teil 2. Die CIE-Weiße des Papiers wurde gemessen nach ISO 2469. Die Meßergebnisse können der Tabelle 8 entnommen werden.

**Tabelle 8**

| Auftrag von | Weiße R 457 | Weiße CIE |
|---|---|---|
| Ohne | 88,1 | 86,8 |
| Mischung 9 | 104,6 | 128,4 |
| Mischung 10 | 99,8 | 120,0 |
| Mischung 11 | 99,2 | 118,7 |
| Mischung 12 | 98,6 | 117,2 |
| Mischung 13 | 102,7 | 130,6 |

Aus den Meßwerten der Tabelle 7 und 8 erkennt der Fachmann, daß die erfindungsgemäße Verwendung der erfindungsgemäßen Mischungen aus kationischen Polyelektrolyten und Aufhellern aus der Familie der Triazinylaminostilbene mit 4 Sulfonsäuregruppen eine ungewöhnlich große Steigerung der Weiße des Papiers bewirkt.

### Beispiele für Mischungen

Mischung M1: Wäßrige Lösung, enthaltend 10% eines Polyvinylformamids mit K-Wert 30,5 und 0,5% (fest) eines optischen Aufhellers mit 6 Sulfonsäuregruppen (Tinopal^{®} SPP-Z liquid).

Mischung M2: Wäßrige Lösung, enthaltend 10% eines Polyvinylformamids mit K-Wert 30, 5 und Hydrolysegrad 3,3% und 0,5% (fest) eines optischen Aufhellers mit 6 Sulfonsäuregruppen (Tinopal^{®} SPP-Z liquid).

Mischung M3: Wäßrige Lösung, enthaltend 10% eines Polyvinylformamids mit K-Wert 30,5 und Hydrolysegrad 12,3% und 0,5% (fest) eines optischen Aufhellers mit 6 Sulfonsäuregruppen (Tinopal^{®} SPP-Z liquid).

Mischung M4: Wäßrige Lösung, enthaltend 10% eines Polyvinylformamids mit K-Wert 45,9 und 0,5% (fest) eines optischen Aufhellers mit 6 Sulfonsäuregruppen (Tinopal^{®} SPP-Z liquid).

Mischung M5: Wäßrige Lösung, enthaltend 10% eines Polyvinylformamids mit K-Wert 45,9 und Hydrolysegrad 5,4% und 0,5% (fest) eines optischen Aufhellers mit 6 Sulfonsäuregruppen (Tinopal^{®} SPP-Z liquid).

Mischung M6: Wäßrige Lösung, enthaltend 10% eines Polyvinylformamids mit K-Wert 45, 9 undHydrolysegrad 13,1% und 0,5% (fest) eines optischen Aufhellers mit 6 Sulfonsäuregruppen (Tinopal^{®} SPP-Z liquid).

Mischung M7: Wäßrige Lösung, enthaltend 10% eines Polyvinylformamids mit K-Wert 78,2 und 0,5% (fest) eines optischen Aufhellers mit 6 Sulfonsäuregruppen (Tinopal^{®} SPP-Z liquid).

Mischung M8: Wäßrige Lösung, enthaltend 10% eines Polyvinylformamids mit K-Wert 30,5 und 0,5% (fest) eines optischen Aufhellers mit 2 Sulfonsäuregruppen (Tinopal^{®} MC liquid).

Mischung M9: Wäßrige Lösung, enthaltend 10% eines Polyvinylformamids mit K-Wert 45,9 und 0,5% (fest) eines optischen Aufhellers mit 2 Sulfonsäuregruppen (Tinopal^{®} MC liquid).

Mischung M10: Wäßrige Lösung, enthaltend 10% eines Polyvinylformamids mit K-Wert 45,9 und Hydrolysegrad 5,4% und 0,5% (fest) eines optischen Aufhellers mit 2 Sulfonsäuregruppen (Tinopal^{®} MC liquid).

Mischung M11: Wäßrige Lösung, enthaltend 10% eines Polyvinylformamids mit K-Wert 45,9 und Hydrolysegrad 13,1% und 0,5% (fest) eines optischen Aufhellers mit 2 Sulfonsäuregruppen (Tinopal^{®} MC liquid).

Mischung M12: Wäßrige Lösung, enthaltend 10% eines Polyvinylformamids mit K-Wert 78,2 und 0,5% (fest) eines optischen Aufhellers mit 2 Sulfonsäuregruppen (Tinopal^{®} MC liquid).

Vergleichsmischung 1: Wäßrige Lösung, enthaltend 10% eines Polyvinylalkohols (Rhodoviol®R4/20 der Firma Rhodia) und 0,5% (fest) eines optischen Aufhellers mit 6 Sulfonsäuregruppen (Tinopal^{®} SPP-Z liquid).

Vergleichsmischung 2: Wäßrige Lösung, enthaltend 10% eines Polyvinylalkohols (Rhodoviol®R4/20 der Firma Rhodia) und0,5% (fest) eines optischen Aufhellers mit 2 Sulfonsäuregruppen (Tinopal^{®} MC liquid).

### Beispiel 9

Auf ein handelsübliches holzfreies Streichrohpapier mit den in Tabelle 9 angegebenen optischen Eigenschaften wurden 10-prozentige wäßrige Mischungen aus optischen Aufhellern und Polymeren, die N-vinylcarbonsäureamide einpolymerisiert enthalten, bzw. zum Vergleich einen dem Stand der Technik entsprechenden Polyvinylalkohol (Rhodoviol^{®} R4/20 der Firma Rhodia) enthalten, mit dem Handrakel so aufgetragen, daß nach dem Trocknen 2,5 g/ m² der Mischung auf dem Papier verblieben. Das Papier wurde entsprechend dem Stand der Technik getrocknet, mit einem Kalander satiniert und untersucht. Die Weiße R 457 des Papiers wurde bestimmt nach DIN 53 145, Teil 2. Die CIE-Weiße des Papiers wurde gemessen nach ISO 2469. Die Meßergebnisse können der Tabelle 1 entnommen werden. Das Papier wurde mit einem handelsüblichen Ink-Jet-Drucker mit einem farbigen Testbild bedruckt. Mit Hilfe eines standardisierten Messverfahrens wurde an den Testbildern das Bleeding bestimmt. Je kleiner die Zahlen in der Rubrik "Bleeding" sind, desto schwächer ausgeprägt ist diese Eigenschaft und desto besser ist die Qualität des Druckbildes.

**Tabelle 9**

| Auftrag von | **Weiße R 457** | **Weiße CIE** | **Bleeding** |
|---|---|---|---|
| Ohne | 90,5 | 97,8 | 2330 |
| Vergleichsmischung 1 | 102,7 | 134,7 | 2343 |
| Mischung M1 | 104,9 | 138,4 | 2301 |
| Mischung M2 | 104, 6 | 137,6 | 2325 |
| Mischung M3 | 104,1 | 135,9 | 1912 |
| Mischung M4 | 105,8 | 140,9 | 1660 |
| Mischung M5 | 105,3 | 139,1 | 1298 |
| Mischung M6 | 104,4 | 136,4 | 1292 |
| Mischung M7 | 106,9 | 143,7 | 986 |

Aus den Meßwerten der Tabelle 9 erkennt der Fachmann, daß die erfindungsgemäße Verwendung der erfindungsgemäßen Mischungen eine ungewöhnlich große Steigerung der Weiße des Papiers bewirkt. Ferner sieht man, daß fast alle der erfindungsgemäßen Mischungen zusätzlich zur Weißeerhöhung auch das Bleeding im Ink-Jet-Druckbild deutlich erniedrigen.

### Beispiel 10

Auf ein Papier, das mit 10 g/m² einer Beschichtung versehen ist, die aus 100 Teilen Calciumcarbonat, 6 Teilen Stärke, 8 Teilen einer 50%igen Polymerdispersion und kleineren Mengen Hilfsmitteln besteht, wurden 10-prozentige wäßrige Mischungen aus optischen Aufhellern und Polymeren, die N-Vinylcarbonsäureamide einpolymerisiert enthalten, bzw. zum Vergleich einen dem Stand der Technik entsprechenden Polyvinylalkohol (Rhodoviol^{®}R4/20 der Firma Rhodia) enthalten, mit dem Handrakel so aufgetragen, daß nach dem Trocknen 1,0 g/ m² der Mischung auf dem Papier verblieben. Das Papier wurde entsprechend dem Stand der Technik getrocknet, kalandriert und untersucht. Die Weiße R 457 des Papiers wurde bestimmt nach DIN 53 145, Teil 2. Die CIE-Weiße des Papiers wurde gemessen nach ISO 2469. Die Meßergebnisse können der Tabelle 10 entnommen werden. Das Papier wurde mit einem handelsüblichen Ink-Jet-Drucker mit einem farbigen Testbild bedruckt. Mit Hilfe standardisierter Messverfahrens wurden an den Testbildern Bleeding und Wicking bestimmt. Je kleiner die Zahlen in den Rubriken "Bleeding" und "Wicking" sind, desto schwächer ausgeprägt sind diese Eigenschaften und desto besser ist die Qualität des Druckbildes.

**Tabelle 10**

| Auftrag von | **Weiße R 457** | **Weiße CIE** | **Bleeding** | **Wicking** |
|---|---|---|---|---|
| Ohne | 89,2 | 90,2 | 1971 | 985 |
| Vergleichsmischung 1 | 102,6 | 131,7 | 2663 | 926 |
| Mischung M1 | 106,4 | 138,6 | 1843 | 821 |
| Mischung M2 | 105,7 | 136,7 | 1820 | 909 |
| Mischung M3 | 105,5 | 135,6 | 1031 | 885 |
| Mischung M4 | 105,9 | 137,4 | 2102 | 754 |
| Mischung M5 | 105,7 | 136,4 | 1138 | 801 |
| Mischung M6 | 105,2 | 135,1 | 815 | 800 |
| Mischung M7 | 107,1 | 140,5 | 755 | 747 |

Aus denMeßwerten der Tabelle 10 erkennt der Fachmann, daß die erfindungsgemäße Verwendung der erfindungsgemäßen Mischungen eine ungewöhnlich große Steigerung der Weiße des Papiers bewirkt. Ferner erkennt man die starke Verbesserung des Wicking und besonders des Bleeding im Vergleich zum unbehandelten Papier und speziell zur Vergleichsmischung 1, die das Bleeding deutlich verstärkt und dadurch das Druckbild verschlechtert.

### Beispiel 11

Auf ein handelsübliches holzfreies Streichrohpapier mit den in Tabelle 11 angegebenen optischen Eigenschaften wurden 10-prozentige wäßrige Mischungen aus optischen Aufhellern und Polymeren, die N-Vinylcarbonsäureamide einpolymerisiert enthalten, bzw. zum Vergleich einen dem Stand der Technik entsprechenden Polyvinylalkohol (Rhodoviol^{®} R4/20 der Firma Rhodia) enthalten, mit dem Handrakel so aufgetragen, daß nach dem Trocknen 2,5 g/m² der Mischung auf dem Papier verblieben. Das Papier wurde entsprechend dem Stand der Technik getrocknet, mit einem Kalander satiniert und untersucht. Die Weiße R 457 des Papiers wurde bestimmt nach DIN 53 145, Teil 2. Die CIE-Weiße des Papiers wurde gemessen nach ISO 2469. Die Meßergebnisse können der Tabelle 11 entnommen werden.

Die Meßwerte der Tabelle 11 zeigen, daß die erfindungsgemäße Verwendung der erfindungsgemäßen Mischungen eine ungewöhnlich große Steigerung der Weiße des Papiers bewirkt. Ferner sieht man auch hier, daß die erfindungsgemäßen Mischungen zusätzlich zur Weißeerhöhung auch das Bleeding im Ink-Jet-Druckbild deutlich erniedrigen.

**Tabelle 11**

| Auftrag von | **Weiße R 457** | **Weiße CIE** | **Bleeding** |
|---|---|---|---|
| Ohne | 90,8 | 98,9 | 1836 |
| Vergleichsmischung 2 | 102,8 | 133,2 | 2429 |
| Mischung M8 | 105,9 | 139,9 | 2351 |
| Mischung M9 | 105,8 | 139,5 | 1610 |
| Mischung M10 | 105,4 | 138,2 | 1196 |
| Mischung M11 | 105,8 | 138,6 | 981 |
| Mischung M12 | 107,0 | 142,5 | Nicht gemessen |

### Beispiel 12

Auf ein Papier, das mit 10 g/m² einer Beschichtung versehen ist, die aus 100 Teilen Calciumcarbonat, 6 Teilen Stärke, 8 Teilen einer 50%igen Polymerdispersion und kleineren Mengen Hilfsmitteln besteht, wurden 10-prozentige wäßrige Mischungen aus optischen Aufhellern und Polymeren, die N-Vinylcarbonsäureamide einpolymerisiert enthalten, bzw. zum Vergleich einen dem Stand der Technik entsprechenden Polyvinylalkohol (Rhodoviol^{®}R4/20 der Firma Rhodia) enthalten, mit dem Handrakel so aufgetragen, daß nach dem Trocknen 1,0 g/ m² der Mischung auf dem Papier verblieben. Das Papier wurde entsprechend dem Stand der Technik getrocknet, kalandriert und untersucht. Die Weiße R 457 des Papiers wurde bestimmt nach DIN 53 145, Teil 2. Die CIE-Weiße des Papiers wurde gemessen nach ISO 2469. Die Meßergebnisse können der Tabelle 12 entnommen werden.

**Tabelle 12**

| Auftrag von | **Weiße R 457** | **Weiße CIE** | **Bleeding** | **Wicking** |
|---|---|---|---|---|
| Ohne | 89,2 | 90,2 | 1968 | 1027 |
| Vergleichsmischung 2 | 100,4 | 125,3 | 2209 | 1074 |
| Mischung M8 | 102,6 | 129, 6 | 1707 | 937 |
| Mischung M9 | 102,4 | 128,8 | 1663 | 700 |
| Mischung M10 | 102,4 | 128,9 | 1141 | 792 |
| Mischung M11 | 102,7 | 129,3 | 868 | 858 |
| Mischung M12 | 103,7 | 132,7 | 760 | 710 |

Aus der Tabelle 12 sieht man, daß die erfindungsgemäße Verwendung der erfindungsgemäßen Mischungen eine ungewöhnlich große Steigerung der Weiße des Papiers bewirkt. Ferner erkennt man die starke Verbesserung des Wicking und besonders des Bleeding im Vergleich zum unbehandelten Papier und speziell zur Vergleichsmischung 2, die das Bleeding deutlich verstärkt und dadurch das Druckbild verschlechtert.

## Patentansprüche

1. Verfahren zur Herstellung von Aufzeichnungsmaterialien, **dadurch gekennzeichnet, dass** man Mischungen A, enthaltend
i) 0,2 bis 2 Gew.-% von mindestens einem optischen Aufheller,
ii) 5 bis 15 Gew.-% von mindestens einem kationischen Polyelektrolyten, wobei es sich um ein Polymer oder Copolymer handelt, welches mindestens ein N-Vinylcarbonsäureamid einpolymerisiert enthält, und
iii) 83 bis 94,8 Gew.-% von mindestens einem Lösungsmittel
bezogen auf 100 Gew.-% Mischung auf das Aufzeichnungsmaterial aufbringt.

2. Verfahren gemäß Anspruch 1, **dadurch gekennzeichnet, dass** es sich bei den kationischen Polyelektrolyten um polymere Verbindungen mit dem Polymerbaustein der allgemeinen Formel (I) handelt, 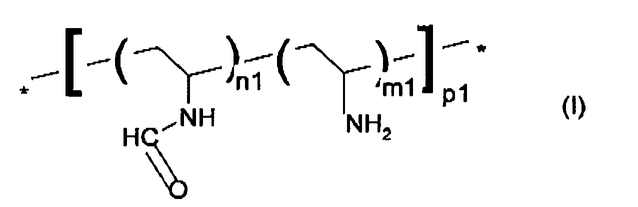 in der das Verhältnis von n₁ : m₁ Werte von 99 : 1 bis 1 : 99 betragen und p₁ Werte zwischen 30 und 30 000 einnehmen kann, oder deren Salze.

3. Beschichtete Papiere und Kartons, erhältlich gemäß einem Verfahren der Ansprüche 1 oder 2.

4. Ink-Jet-Papiere, erhältlich gemäß einem Verfahren der Ansprüche 1 oder 2.

5. Verwendung von Papier oder Karton gemäß Anspruch 3 oder 4 in einem Druckverfahren.

6. Verwendung nach Anspruch 5, in dem das Druckverfahren ein Ink-Jet-Druckverfahren ist.

7. Mischungen A, enthaltend
i) 0,2 bis 2 Gew.-% mindestens eines optischen Aufhellers,
ii) 5 bis 15 Gew.-% mindestens eines kationischen Polyelektrolyten, wobei es sich um ein Polymer oder Copolymer handelt, welches mindestens ein N-Vinylcarbonsäureamid einpolymerisiert enthält, und
iii) 83 bis 94,8 Gew.-% mindestens eines Lösungsmittels,
bezogen auf 100 Gew.-% Mischung.

## Claims

1. A process for the production of recording materials, wherein mixtures A comprising
i) from 0.2 to 2% by weight of at least one optical brightener,
ii) from 5 to 15% by weight of at least one cationic polyelectrolyte, said polyelectrolyte being a polymer or copolymer which comprises at least one N-vinylcarboxamide incorporated in the form of polymerized units, and
iii) from 83 to 94.8% by weight of at least one solvent,
based on 100% by weight of mixture, are applied to the recording material.

2. The process according to claim 1, wherein the cationic polyelectrolytes are polymeric compounds having the polymer building block of the general formula (I) 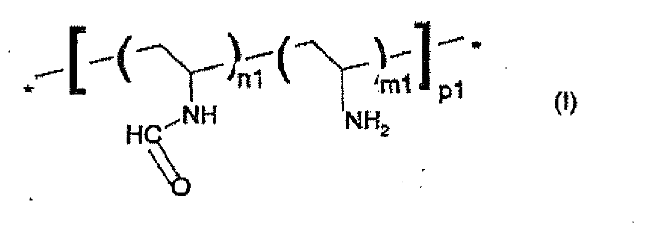 where the ratio n₁ : m₁ may have values of from 99:1 to 1:99 and p₁ may assume values of from 30 to 30 000, or salts thereof.

3. A coated paper or cardboard obtainable according to a process of either of claims 1 and 2.

4. An inkjet paper obtainable according to a process of either of claims 1 and 2.

5. The use of paper or cardboard according to claim 3 or 4 in a printing process.

6. The use according to claim 5, in which the printing process is an inkjet printing process.

7. A mixture A comprising
i) from 0.2 to 2% by weight of at least one optical brightener,
ii) from 5 to 15% by weight of at least one cationic polyelectrolyte, said polyelectrolyte being a polymer or copolymer which comprises at least one N-vinylcarboxamide incorporated in the form of polymerized units, and
iii) from 83 to 94.8% by weight of at least one solvent,
based on 100% by weight of mixture.

## Revendications

1. Procédé pour la préparation de matériaux d'impression, **caractérisé en ce qu'**on applique des mélanges A, contenant
i) 0,2 à 2% en poids d'au moins un azurant optique,
ii) 5 à 15% en poids d'au moins un polyélectrolyte cationique, où il s'agit d'un polymère ou d'un copolymère, qui contient au moins un amide de l'acide N-vinylcarboxylique sous forme copolymérisée, et
iii) 83% à 94,8% en poids d'au moins un solvant
par rapport à 100% en poids de mélange, sur le matériau d'impression.

2. Procédé selon la revendication 1, **caractérisé en ce qu'**il s'agit, pour les polyélectrolytes cationiques, de composés polymères présentant l'élément polymère de formule générale (I), 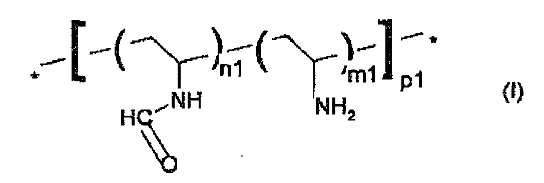 dans lequel le rapport de n₁ : m₁ peut prendre des valeurs de 99:1 à 1:99 et p₁ peut prendre des valeurs entre 30 et 30 000, ou de leurs sels.

3. Papiers et cartons revêtus, pouvant être obtenus selon un procédé selon les revendications 1 ou 2.

4. Papiers pour imprimantes à jet d'encre pouvant être obtenus selon un procédé selon les revendications 1 ou 2.

5. Utilisation de papier ou de carton selon la revendication 3 ou 4 dans un procédé d'impression.

6. Utilisation selon la revendication 5, dans lequel le procédé d'impression est un procédé d'impression à jet d'encre.

7. Mélanges A, contenant
i) 0,2 à 2% en poids d'au moins un azurant optique,
ii) 5 à 15% en poids d'au moins un polyélectrolyte cationique, où il s'agit d'un polymère ou d'un copolymère, qui contient au moins un amide de l'acide N-vinylcarboxylique sous forme copolymérisée, et
iii) 83 à 94,8% en poids d'au moins un solvant,
par rapport à 100% en poids de mélange.
